(19) Europäisches Patentamt
European Patent Office
Office européen des brevets

(11) **EP 2 303 530 B1**

(12) # EUROPÄISCHE PATENTSCHRIFT

(45) Veröffentlichungstag und Bekanntmachung des Hinweises auf die Patenterteilung:
**13.02.2013  Patentblatt 2013/07**

(51) Int Cl.:
***B29B 7/48*** *(2006.01)*     ***B29C 47/40*** *(2006.01)*

(21) Anmeldenummer: **09765528.6**

(22) Anmeldetag: **30.05.2009**

(86) Internationale Anmeldenummer:
**PCT/EP2009/003891**

(87) Internationale Veröffentlichungsnummer:
**WO 2009/152948 (23.12.2009 Gazette 2009/52)**

(54) **VERFAHREN ZUR EXTRUSION PLASTISCHER MASSEN**

METHOD FOR EXTRUDING PLASTIC MATERIALS

PROCÉDÉ D'EXTRUSION DE MASSES PLASTIQUES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **20.06.2008  DE 102008029305**

(43) Veröffentlichungstag der Anmeldung:
**06.04.2011  Patentblatt 2011/14**

(73) Patentinhaber: **Bayer MaterialScience AG
51368 Leverkusen (DE)**

(72) Erfinder:
  • **KÖNIG, Thomas
    51375 Leverkusen (DE)**
  • **BIERDEL, Michael
    51373 Leverkusen (DE)**
  • **LIESENFELDER, Ulrich
    51469 Bergisch Gladbach (DE)**
  • **KOHLGRÜBER, Klemens
    51515 Kürten (DE)**
  • **RECHNER, Johann
    47906 Kerpen (DE)**

(74) Vertreter: **BIP Patents
c/o Bayer Intellectual Property GmbH
Creative Campus Monheim
Alfred-Nobel-Straße 10
40789 Monheim (DE)**

(56) Entgegenhaltungen:
**EP-A2- 0 160 124     WO-A2-02/09919
US-A- 5 487 602**

  • **TODD D B: "IMPROVING INCORPORATION OF FILLERS IN PLASTICS A SPECIAL REPORT" ADVANCES IN POLYMER TECHNOLOGY, WILEY AND SONS, HOBOKEN, NJ, US, Bd. 19, Nr. 1, 21. März 2000 (2000-03-21), Seiten 54-64, XP000954227 ISSN: 0730-6679**
  • **RAUWENDAAL C: "THE GEOMETRY OF SELF-CLEANING TWIN-SCREWS EXTRUDERS" ADVANCES IN POLYMER TECHNOLOGY, WILEY AND SONS, HOBOKEN, NJ, US, Bd. 15, Nr. 2, 21. Juni 1996 (1996-06-21), Seiten 127-133, XP000586048 ISSN: 0730-6679**

**Beschreibung**

Die Erfindung betrifft ein Verfahren zur Extrusion plastischer Massen, Insbesondere von Polymerschmelzen und Mischungen von Polymerschmelzen, vor allem Thermoplasten und Elastomeren, besonders bevorzugt Polycarbonat und Polycarbonat-Blends, auch unter Einmischung anderer Stoffe wie z.B. Feststoffe, Flüssigkeiten, Gase oder andere Polymere oder andere Polymermischungen mit verbesserten optischen Eigenschaften, mit Hilfe eines Mehrwellenextruders mit besonderen Schneckengeometrien.

Extrusion ist ein bekanntes Verfahren bei der Herstellung, Aufbereitung und Verarbeitung von Polymeren. Unter Extrusion wird hier und im Folgenden die Behandlung eines Stoffes oder Stoffgemisches in einem gleichsinnig drehenden Doppelschnecken- oder Mehrwellenextruder, wie er umfassend in [1] beschrieben ist, verstanden ([1] = Kohlgrüber. Der gleichläufige Doppelschneckenextruder, Hanser Verlag München 2007).

Die Behandlung plastischer Massen während einer Extrusion umfasst eine oder mehrere der Verfahrensoperationen Fördern, Aufschmelzen, Dispergieren, Mischen, Abpressen von flüssigen Bestandteilen, Entgasen und Druckaufbau.

Bei der Herstellung von Polymeren dient die Extrusion beispielsweise zur Entfernung von flüchtigen Bestandteilen wie Monomere und Rest-Lösemittel aus dem Polymer ([1], S. 192 bis 212), zur Reaktion bei Polyadditions- und Polykondensationsreaktionen sowie gegebenenfalls zum Aufschmelzen und Konfektionierung von Polymeren sowie ggf. der Mischung von Additiven mit dem Polymer.

Bei der Aufbereitung von Polymeren werden durch Extrusion vor allem Mischungen von Polymeren mit Additiven und Zuschlag- und Verstärkungsstoffen sowie Farben sowie Mischungen von verschiedenen Polymeren, die sich z.B. in chemischer Zusammensetzung, Molekulargewicht oder Molekülstruktur unterscheiden, hergestellt (siehe z.B. [1], S. 59 bis 93). Dieses auch als Compoundierung bezeichnete Verfahren dient der Polymeraufbereitung zur Herstellung der fertigen Kunststoff-Formmasse (das Compound) unter Einsatz der Kunststoffrohstoffe, die üblicherweise aufgeschmolzen werden, unter Zugabe und Mischen von Füll- und/oder Verstärkungsstoffen, Weichmachern, Haftvermittlern, Gleitmitteln, Stabilisatoren etc mit dem Polymer. Die Aufbereitung umfasst häufig auch die Entfernung von flüchtigen Bestandteilen wie z.B. Luft und Wasser. Die Aufbereitung kann auch eine chemische Reaktion wie z.B. Pfropfung, Modifikation von funktionellen Gruppen oder Modifikationen des Molekulargewichtes durch gezielten Auf- oder Abbau des Molekulargewichts.

Wie allgemein bekannt und z.B. in [1] auf den Seiten 169 bis 190 beschrieben lässt sich Mischen in distributives und dispersives Mischen einteilen. Unter distributivem Mischen wird das gleichmäßige Verteilen von verschiedenen Komponenten in einem betrachteten Volumen verstanden. Distributives Mischen liegt zum Beispiel bei der Vermischung gleichartiger Polymere vor. Beim dispersiven Mischen werden Feststoffteilchen, Flüssigkeitstropfen oder Gasblasen zunächst zerteilt. Für das Zerteilen müssen ausreichend große Scherkräfte aufgebracht werden, um zum Beispiel die Oberflächenspannung an der Grenzfläche zwischen Polymerschmelze und einem Additiv zu überwinden. Unter Mischen wird im Folgenden immer distributives und dispersives Mischen verstanden.

In der Veröffentlichung [1] auf Seite 73ff wird die Schmelzeförderung und der Druckaufbau beschrieben. Die Schmelzeförderzonen dienen dazu, das Produkt von einer Verfahrenszone zur nächsten zu transportieren sowie Füllstoffe einzuziehen. Schmelzeförderzonen sind in der Regel teilgefüllt, wie z.B. beim Transport des Produktes von einer zur nächsten Verfahrenszone, beim Entgasen und in Verweilzeitzonen.

Bei der Verarbeitung von Polymeren werden die Polymere bevorzugt in die Form eines Halbzeuges, eines gebrauchsfertigen Produktes oder eines Bauteiles gebracht. Die Verarbeitung kann z.B. durch Spritzgießen, Extrusion, Folienblasen, Folienziehen oder Verspinnen erzeugen. Die Verarbeitung kann auch Mischungen von Polymeren mit Füll- und Zuschlagstoffen und Additiven sowie chemische Modifikationen wie z.B. Vulkanisation umfassen.

Extrusion von Polymeren werden, wie dem Fachmann bekannt ist, vorteilhaft auf Schneckenmaschinen mit zwei oder ggf. mehr Wellen durchgeführt.

Gleichsinnig drehende Zwei- oder ggf. Mehrwellenmaschinen, deren Rotoren sich gegenseitig exakt abschaben, sind bereits seit langem bekannt (DE 862 668). In der Herstellung, Aufarbeitung und Verarbeitung von Polymeren haben Schneckenmaschinen, die auf dem Prinzip exakt abschabender Profile beruhen, eine vielfältige Nutzung erfahren. Derartige Schneckenmaschinen haben bekanntlich eine gute Mischwirkung, eine gute Entgasungswirkung und eine gute Wirkung zum Aufschmelzen von Polymeren. Vorteile in der Qualität der damit hergestellten Produkte bieten sie, weil Polymerschmelzen an Oberflächen anhaften und unter üblichen Verarbeitungstemperaturen mit der Zeit degradieren, was durch die selbstreinigende Wirkung der exakt abschabenden Schnecken unterbunden wird. Regeln zur Erzeugung exakt abschabender Schneckenprofile wurden beispielsweise in Klemens Kohlgrüber. Der gleichläufige Doppelschneckenextruder, Hanser Verlag München 2007, S.96 ff [1] dargestellt. Dort wird die Konstruktion von ein-, zwei- und dreigängigen Profilen beschrieben.

Dem Fachmann ist bekannt, dass im Bereich der Schneckenkämme besonders viel Energie in der Schmelze dissipiert wird, was lokal zu starken Überhitzungen im Produkt führt. Dies ist beispielsweise in [1] auf den Seiten 160ff dargestellt. Diese lokalen Überhitzungen können zu Schädigungen im Produkt wie z.B. Veränderung in Geruch, Farbe, chemischer Zusammensetzung oder Molekulargewicht oder zur Bildung von Inhomogenitäten im Produkt wie Gelkörpern oder Stippen führen. Vor allem ein großer Kammwinkel ist hierbei schädlich.

Moderne Doppelschneckenextruder verfügen über ein Baukastensystem, bei dem verschiedene Schneckenelemente auf einer Kernwelle aufgezogen werden können. Hiermit kann der Fachmann den Doppelschneckenextruder an die jeweilige Verfahrensaufgabe anpassen. In der Regel werden heute Schneckenelemente mit zwei- und dreigängigen Profilen verwendet, da eingängige Schneckenprofile aufgrund ihres großen Kammwinkels einen viel zu hohen Energieeintrag haben.

Nach dem Stand der Technik [1] (siehe z.B. Seite 101) liegt die Geometrie der exakt abschabenden Schneckenelemente durch Angabe der unabhängigen Größen Gangzahl Z, Achsabstand A und Gehäusedurchmesser (entspricht dem Durchmesser DE der exakt abschabenden Kontur) fest. Die Gangzahl ist hierbei die Zahl der Kreisbögen eines jeden Elementes, die die Außenwand abreinigen. Der Winkel eines solchen Kreisbogens, bezogen auf den Drehmittelpunkt, wird als Kammwinkel KW0 bezeichnet. Im Bereich des Kammwinkels ist der Außenradius des Profils gleich dem Gehäuseradius. KW0 ist nach dem Stand der Technik keine einstellbare und an die Aufgabenstellung anpassbare Größe, sondern ergibt sich aus G1. 1 zu

$$KW0 = \frac{\pi}{Z} - 2\arccos\left(\frac{A}{DE}\right) \qquad \text{(Gl. 1)}$$

wobei KW0 der Kammwinkel des exakt abschabenden Profils im Bogenmaß und $\pi$ die Kreiszahl ($\pi \approx 3{,}14159$) ist. Die Summe der Kammwinkel über beide Elemente eines dicht kämmenden Elementepaars SKW0 ergibt sich zwangsläufig zu

$$SKW0 = 2\pi - 4Z\arccos\left(\frac{A}{DE}\right) \qquad \text{(Gl. 2)}$$

Dem Fachmann ist bekannt, dass direkt abschabende Schneckenprofile nicht direkt in einen Doppelschneckenextruder eingesetzt werden können, vielmehr sind Spiele zwischen den Schneckenelementen und dem Gehäuse und / oder zwischen den Schneckenelementen selbst erforderlich. Die Geometriedaten für die ausgeführten Schneckengeometrien verschafft sich der Fachmann auf Grundlage der Kontur exakt abschabender Schnecken mit bekannten Methoden, wie sie z.B. in [1] dargestellt sind. Für Förderelemente sind in [1] auf den Seiten 28 ff verschiedene mögliche Strategien beschrieben. Bei Verwendung der dort angegebenen Längsschnitt- oder Raumäquidistante reduzieren sich die Kammwinkel KWA0 der tatsächlich ausgeführten Schnecken, wie z.B. in [1], S. 100 dargestellt ist, gegenüber dem Winkel KW0. Insbesondere ein großes Spiel zwischen den Schnecken führt zu Verringerung von KWA0. Ein großes Spiel zwischen den Schnecken zur Verringerung des Kammwinkels ist jedoch ungünstig, weil dadurch der Effekt der gegenseitigen Selbstreinigung der Schnecken verringert wird und lange Verweilzeiten an der Oberfläche der Schneckenelemente auftreten, die zu lokaler Produktschädigung und damit zu Verschlechterung der Qualität des Produktes führt. Auch ist dem Fachmann bekannt, dass durch Vergrößerung der Spiele die Wirksamkeit von Schneckenelementen bezüglich Förderwirkung und Druckaufbau negativ beeinflusst wird, so dass zur Erfüllung einer gegebenen verfahrenstechnischen Aufgabe Spiele nicht zu groß gewählt werden dürfen.

Dokument EP-A-O 160 124 offenart ein Verfahren gemäß dem Oberbegriff des Anspruchs 1.

Es bestand daher die Aufgabe, ein Verfahren zur Extrusion von Polymeren zu finden, das die Qualitätsvorteile der geringen Gelbildung durch Selbstreinigung und den Qualitätsvorteilen niedriger Temperatur verbindet.

Die Aufgabe wird überraschenderweise dadurch gelöst, dass ein dicht kämmender, gleichlaufender Entgasungsextruder verwendet wird, wobei Schneckenelemente verwendet werden, die besondere Geometrien aufweisen.

Gegenstand der Erfindung ist daher ein Verfahren gemäß Anspruch 1 zur Aufarbeitung von plastischen Massen, insbesondere von Polymerschmelzen und Mischungen von Polymerschmelzen, vor allem Thermoplasten und Elastomeren, besonders bevorzugt Polycarbonat und Polycarbonat-Blends, auch unter Einmischung anderer Stoffe wie z.B. Feststoffe, Flüssigkeiten, Gase oder andere Polymere oder andere Polymermischungen unter Verwendung gleichlaufenden, dicht kämmenden Entgasungsextruders unter Verwendung von paarweise gleichsinnigen und paarweise exakt abschabenden Schneckenwellen mit zwei oder mehr Schneckengängen, dadurch gekennzeichnet, dass die Summe aller Kammwinkel (SKW) eines Elementepaares frei wählbar, größer als 0 und kleiner als

$$2\pi - 4\,Z\,\arccos\!\left(\frac{A}{DE}\right)$$

ist,

wobei *Z* die Gangzahl, *A* der Achsabstand zwischen zwei Schneckenelementen und DE der Außendurchmesser der Schneckenelemente ist. Bei erfindungsgemäßen Schneckenelementen können die Geometrien auf der schiebenden und der ziehenden Flanke nach Bedarf individuell gestaltet werden und die die Kämme begrenzenden Kanten nach Bedarf abgerundet werden.

Dabei ist die Erfindung nicht auf Schneckenelemente aus der heutzutage üblichen Modulbauweise einer Schnecke aus Schneckenelementen und Kernwellen beschränkt, sondern auch auf Schnecken in Massivbauweise anwendbar. Daher sind unter dem Begriff Schneckenelemente auch Schnecken in Massivbauweise zu verstehen.

Die Gangzahl *Z* erfindungsgemäßer Schneckenelemente beträgt bevorzugt 2, 3, 4, 5, 6, 7 oder 8; besonders bevorzugt beträgt sie 2 bis 4.

Der Außenradius eines Schneckenprofils beträgt *RE=DE*/2, der Innendurchmesser DK und der Innenradius *RK=DK*/2. Damit gilt stets *A=RE+RK*.

Das erzeugende und erzeugte Profil der erfindungsgemäßen Schneckenelemente ("Schneckenprofil") setzt sich aus Kreisbögen zusammen, die tangential ineinander übergehen. Das erzeugende und erzeugte Profil der erfindungsgemäßen Schneckenelemente setzt sich jeweils aus mindestens 6*Z Kreisbögen zusammen.

Die Größe eines Kreisbogens ist durch die Angabe seines Zentriwinkels und seines Radius gegeben. Im Folgenden wird der Zentriwinkel eines Kreisbogens kurz als der Winkel eines Kreisbogens bezeichnet. Die Position eines Kreisbogens ist durch die Position seines Mittelpunkts und durch die Position seiner beiden Endpunkte gegeben.

Das Profil erfindungsgemäßer Schneckenelemente zeichnet sich dadurch aus, dass ein oder mehrere Kreisbögen einen Radius der Größe Null haben können. In diesem Fall weist das Profil einen oder mehrere Knicke auf.

Ein vorgegebenes Schneckenprofil auf einer ersten Welle eines Doppelschneckenextruders (das "erzeugende") legt das Schneckenprofil auf einer benachbarten zweiten Welle (das "erzeugte") eindeutig fest. Das Schneckenprofil auf einer ersten Welle des Doppelschneckenextruders wird daher als das erzeugende Schneckenprofil bezeichnet, während das Schneckenprofil auf der benachbarten zweiten Welle des Doppelschneckenextruders als das erzeugte Schneckenprofil bezeichnet wird. Bei einem Mehrwellenextruder werden das erzeugende Schneckenprofil und das erzeugte Schneckenprofil auf benachbarten Wellen immer abwechselnd eingesetzt.

Die erfindungsgemäßen Schneckenprofile sind stets geschlossen und konvex. Die Summe der Winkel der einzelnen Kreisbögen für jedes Element ist stets 2 $\pi$.

Erfindungsgemäße Schneckenelemente zeichnen sich dadurch aus, dass jeweils ein Kreisbogen des erzeugten Schneckenprofils mit einem Kreisbogen des erzeugenden Schneckenprofils "korrespondiert". Unter "korrespondieren" wird verstanden, dass

- die Winkel von korrespondierenden Kreisbögen gleich groß sind,

- die Summe der Radien korrespondierender Kreisbögen gleich dem Achsabstand ist,

- je eine der Verbindungslinien zwischen dem Mittelpunkt eines Kreisbogens des erzeugenden Schneckenprofils und dessen Endpunkten parallel zu je einer der Verbindungslinien zwischen dem Mittelpunkt des korrespondierenden Kreisbogens des erzeugten Schneckenprofils und dessen Endpunkten verläuft,

- die Richtungen, in denen die Endpunkte eines Kreisbogens des erzeugenden Schneckenprofils vom Mittelpunkt des Kreisbogens aus liegen, jeweils entgegengesetzt sind zu den Richtungen, in denen die Endpunkte des korrespondierenden Kreisbogens des erzeugten Schneckenprofils vom Mittelpunkt des Kreisbogens des erzeugten Schneckenprofils aus liegen,

- der Mittelpunkt eines Kreisbogens des erzeugenden Schneckenprofils einen Abstand zum Mittelpunkt eines korrespondierenden Kreisbogens des erzeugten Schneckenprofil hat, der dem Achsabstand entspricht,

- die Verbindungslinie zwischen dem Mittelpunkt eines Kreisbogens des erzeugenden Schneckenprofils und dem Mittelpunkt des korrespondierenden Kreisbogens des erzeugten Schneckenprofile parallel zu der Verbindungslinie zwischen dem Drehpunkt des erzeugenden Schneckenprofils und dem Drehpunkt des erzeugten Schneckenprofils ist,

- die Richtung, in die der Mittelpunkt eines Kreisbogens des erzeugenden Schneckenprofils verschoben werden müsste, um mit dem Mittelpunkt des korrespondierenden Kreisbogens des erzeugten Schneckenprofils zur Deckung gebracht zu werden, die gleiche ist, in die der Drehpunkt des erzeugenden Schneckenprofils verschoben werden muss, um mit dem Drehpunkt des erzeugten Schneckenprofils zur Deckung gebracht zu werden.

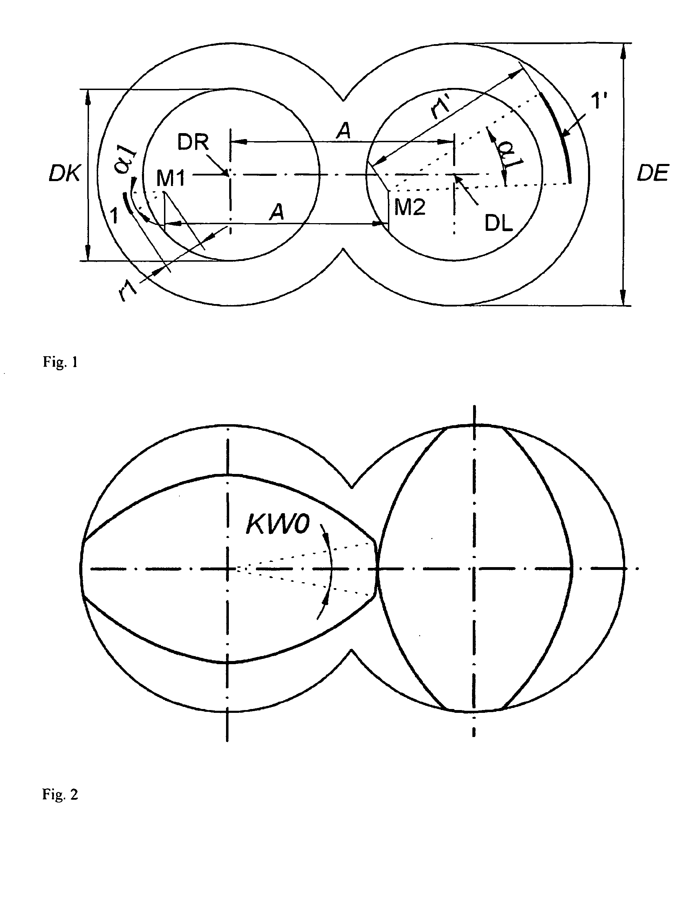

Fig. 1 zeigt ein Beispiel von zwei korrespondierenden Kreisbögen. Der Drehmittelpunkt der erzeugenden Schnecke ist *DR* und der Drehmittelpunkt der erzeugten Schnecke *DL*. In dieser Figur ist Kreisbogen 1 der erzeugende und der Kreisbogen 1' der erzeugte.

Ein erzeugendes Schneckenprofil erfindungsgemäßer Schneckenelemente hat *Z* Kreisbögen, deren Radien gleich *RE* sind und deren Mittelpunkte mit dem Drehmittelpunkt zusammenfallen ("Kammbögen").

Ein erzeugendes Schneckenprofil erfindungsgemäßer Schneckenelemente hat *Z* Kreisbögen, deren Radien gleich RK sind und deren Mittelpunkte mit dem Drehmittelpunkt zusammenfallen ("Nutbögen"). Das korrespondierende erzeugte Schneckenprofil besitzt ebenfalls *Z* Kammbögen und *Z* Nutbögen.

Die Summe der Winkel der Kamm- und Nutbögen der erfindungsgemäßen erzeugenden Schneckenprofile ist frei wählbar, größer als 0 und kleiner als

$$2\pi - 4\,Z\arccos\left(\frac{A}{DE}\right)$$

Die Summe der Winkel aller Kammbögen des erzeugten und des erzeugenden Schneckenprofils ist gleich der Summe der Kamm- und Nutwinkel des erzeugenden Schneckenprofils und ist erfindungsgemäß größer als 0 und kleiner als

$$2\pi - 4\,Z\arccos\left(\frac{A}{DE}\right)$$

In einer bevorzugten Ausführung von Schneckenelementen, wie sie im erfindungsgemäßen Verfahren eingesetzt werden, sind Kammbögen und Nutbögen so angeordnet, dass sie beim Umlauf um das Profil abwechselnd auftreten, d.h. es folgt beim Umlauf auf jeden Kammbogen ein Nutbogen und auf jeden Nutbogen ein Kammbogen. Hieraus ergibt sich für das erzeugte Schneckenprofil zwangsweise, dass die Kammbögen und Nutbögen so angeordnet sind, dass sie beim Umlauf um das Profil abwechselnd auftreten, d.h. es folgt beim Umlauf auf jeden Kammbogen ein Nutbogen und auf jeden Nutbogen ein Kammbogen.

In einer bevorzugten Ausführung haben die erfindungsgemäß eingesetzten Schneckenelemente auf beiden Wellen das gleiche Profil, bis auf eine Drehung um den jeweiligen Drehmittelpunkt des Profils um π/Z für gerade *Z*.

In einer weiteren bevorzugten Ausführung sind die erfindungsgemäß eingesetzten Schneckenelemente punktsymmetrisch zu dem jeweiligen Drehpunkt des Profils, jedoch nicht spiegelsymmetrisch.

In einer weiteren bevorzugten Ausführung sind die erfindungsgemäß eingesetzten Schneckenelemente symmetrisch zu Linien, die durch die Mitte der Kamm- und Nutbögen gehen. Ein Schneckenelement der Gangzahl *Z* hat dann *2\*Z* Symmetrielinien.

Bevorzugt werden die Schneckenelemente als Förderelemente eingesetzt. Ein Förderelement zeichnet sich bekanntlich dadurch aus (siehe zum Beispiel [1], Seiten 227 - 248), dass das Schneckenprofil in Achsrichtung kontinuierlich schraubenförmig verdreht und fortgesetzt wird. Dabei kann das Förderelement rechts- oder linksgängig sein. Die Steigung des Förderelements liegt bevorzugt im Bereich des 0,1-fachen bis 10-fachen des Achsabstandes, wobei unter der Steigung die axiale Länge verstanden wird, die für eine vollständige Drehung des Schneckenprofils erforderlich ist, und die axiale Länge eines Förderelements liegt bevorzugt im Bereich des 0,1-fachen bis 10-fachen des Schneckendurchmessers.

Für die Schneckenprofile erfindungsgemäßer Schneckenelemente werden Spiele im Bereich von 0,1 bis 0,001 bezogen auf den Durchmesser des Schneckenprofils, verwendet, bevorzugt 0,002 bis 0,05 und besonders bevorzugt 0,004 bis 0,02. Die Spiele können, wie dem Fachmann bekannt ist, zwischen Schnecke und Gehäuse und zwischen Schnecke und Schnecke unterschiedlich groß oder gleich sein. Die Spiele können auch konstant oder, in den angegebenen Grenzen, variabel sein. Es ist auch möglich, innerhalb der Spiele ein Schneckenprofil zu verschieben. Dem Fachmann sind Methoden bekannt, um ausgehend von einem vorgegebenen, exakt abschabenden Schneckenprofil, eine Schneckenprofil mit Spielen abzuleiten. Bekannte Methoden hierfür sind beispielsweise die in [1] auf den Seiten 28 ff beschriebene Möglichkeit der Achsabstand-Vergrößerung, der Längsschnitt-Äquidistanten und der Raumäquidistanten, die alle dem Fachmann bekannt sind. Bei der Achsabstand-Vergrößerung wird ein Schneckenprofil mit kleineren Durchmessers konstruiert und um den Betrag des Spiels zwischen den Schnecken auseinandergerückt. Bei der Methode der Längsschnitt-Äquidistanten wird die Längsschnitt-Profilkurve (parallel zur Drehachse des jeweiligen Elements) um das halbe Spiel Schnecke-Schnecke senkrecht zur Profilkurve nach innen, in Richtung zur Drehachse hin, verschoben. Bei der Methode der Raumäquidistanten wird, ausgehend von der Raumkurve, auf der die Schneckenelemente sich abreinigen, das Schneckenelement in der Richtung senkrecht zu den Flächen des exakt abschabenden Profils um das halbe Spiel zwischen Schnecke und Schnecke verkleinert. Bevorzugt wird die Längsschnitt-Äquidistante und die Raumäquidistante, besonders bevorzugt die Raumäquidistante verwendet.

Fig. 2 zeigt die Profile von zweigängigen, nach dem Stand der Technik bekannten Schneckenelementen im Querschnitt. Der Achsabstand beträgt 48 mm, der Außendurchmesser eines Schneckenprofils 58 mm, der Innendurchmesser entsprechend 38 mm und der Kammwinkel KW0 im Bogenmaß 0,3788 (entsprechend 21,7°). Die Summe aller Kammwinkel SKW0 beträgt im Bogenmaß 1,5152.

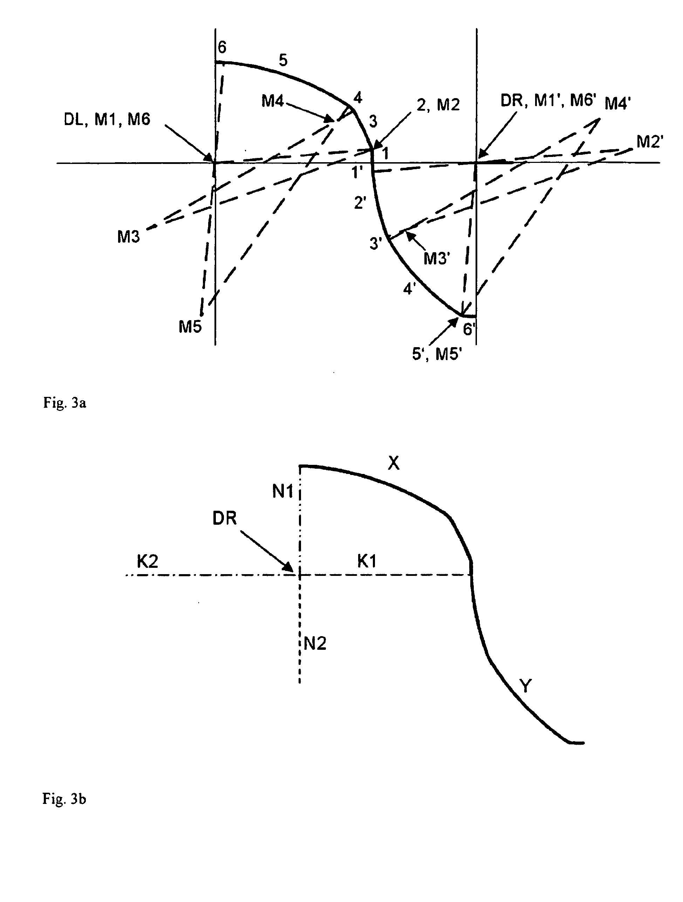

Fig. 3a und 3b zeigen beispielhaft in einer schematischen Darstellung im Querschnitt ein Teilprofil X des erzeugenden und ein dazu korrespondierendes Teilprofil Y des erzeugten Schneckenprofils von erfindungsgemäß eingesetzten zweigängigen Schneckenelementen. Das Teilprofil X wird durch die Kreisbögen 1, 2, 3, 4, 5 und 6 gebildet. Das Teilprofil Y wird durch die zu den jeweiligen Kreisbögen des Teilprofils X korrespondierenden Kreisbögen 1', 2', 3', 4', 5' und 6' gebildet. Die Kreisbögen sind durch ihre jeweiligen Mittelpunkte M1, M2, ..., M6 und M1', M2', ..., M6', ihre jeweiligen Winkel und Radien eindeutig definiert (siehe Fig. 3a).

Im vorliegenden Beispiel beträgt der Achsabstand 48 mm, der Außendurchmesser eines Schneckenprofils 58 mm und der Innendurchmesser 38 mm. Der Kreisbogen 1 ist der Kammbogen des erzeugenden Teilprofils, Kreisbogen 6 der Nutbogen. Kreisbogen 2 hat einen Radius 0, d.h. am Kammbogen hat das erzeugende Profil einen Knick.

In Fig. 3b sind der Übersicht halber die Bezeichnungen der Kreisbögen und Mittelpunkte entfernt worden. Die Teilprofile X und Y sind identisch mit den in Fig. 3a gezeigten Teilprofilen.

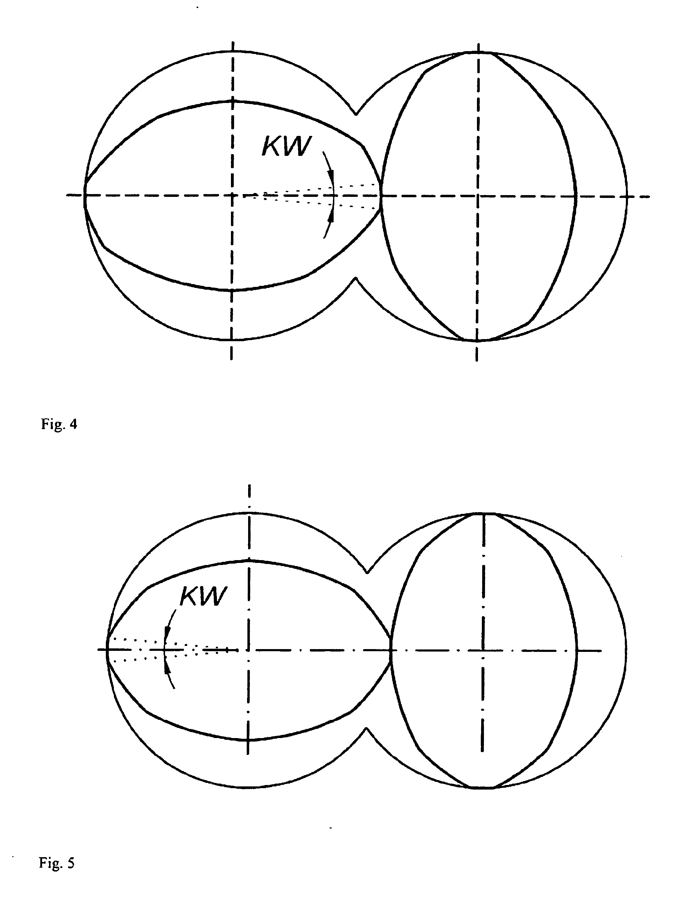

Fig. 4 zeigt schematisch im Querschnitt erfindungsgemäß eingesetzte Schneckenelemente mit einem punktsymmetrischen Schneckenprofil, das sich aus den Fig. 3a oder 3b ergibt, wenn die in den Fig. 3a und 3b gezeigten Teilprofile punktsymmetrisch fortgesetzt werden. Alle Kammwinkel sind identisch und gleich 0,17454 (10°). Beispielhaft ist ein Kammwinkel KW eingezeichnet. Die Summe aller Kammwinkel SKW beträgt 0,698, weniger als die Hälfte des Elementes nach dem Stand der Technik. Das ist ein deutlicher Vorteil gegenüber dem Stand der Technik. Dieses Schneckenprofil hat auch den Vorteil, dass bei Drehrichtung im Uhrzeigersinn die schiebende Flanke einen deutlich größeren Winkel zum Gehäuse bildet als die ziehende Seite, was in Teilfüllung nochmals zu einem deutlich geringerem Energieeintrag führt. Ebenso kann die Drehrichtung umgekehrt werden, was zu erhöhter Dehnung im Kamm führt.

Fig. 5 zeigt schematisch im Querschnitt erfindungsgemäß eingesetzte Schneckenelemente mit einem spiegel- und punktsymmetrischen Schneckenprofil. Im vorliegenden Beispiel beträgt der Achsabstand 48 mm, der Außendurchmesser des Schneckenprofils 58 mm, der Innendurchmesser entsprechend 38 mm und jeder der Kammwinkel 0,175 (10°). Beispielhaft ist ein Kammwinkel *KW* eingezeichnet. Die Summe aller Kammwinkel *SKW* beträgt 0,69813, weniger als die Hälfte als die Summe der Kammwinkel des Elementes nach dem Stand der Technik. Der Vorteil liegt hierbei in der geringeren Energiedissipation.

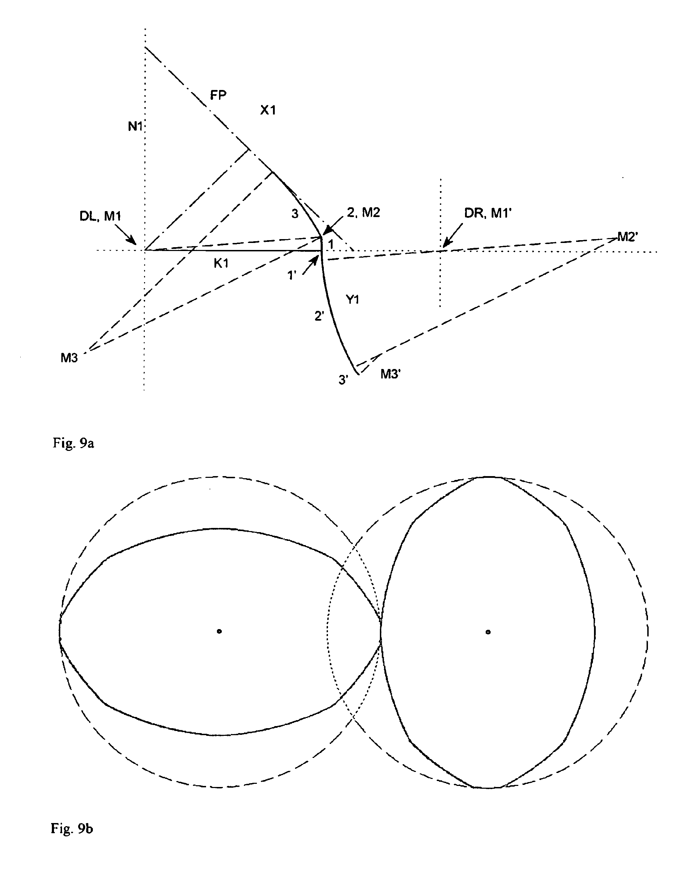

Fig. 9a zeigt zwei korrespondierende Teilprofile X1 (erzeugendes Schneckenprofil) und Y1 (erzeugtes Schneckenprofil) eines Beispiels erfindungsgemäßer, punkt- und spiegelsymmetrischer Schneckenelemente. Das Teilprofil X1 wird durch die Kreisbögen 1, 2 und 3 gebildet. Das Teilprofil Y1 wird durch die entsprechenden korrespondierenden Kreisbögen 1', 2' und 3' gebildet. Der Abstand der Drehpunkte ist auf 1 normiert. Der Kreisbogen 3 tangiert die Gerade FP. In der Tabelle 1 sind die Radien, Winkel, Anfangspunkte der Kreisbögen und Mittelpunkte der Kreisbögen angegeben.

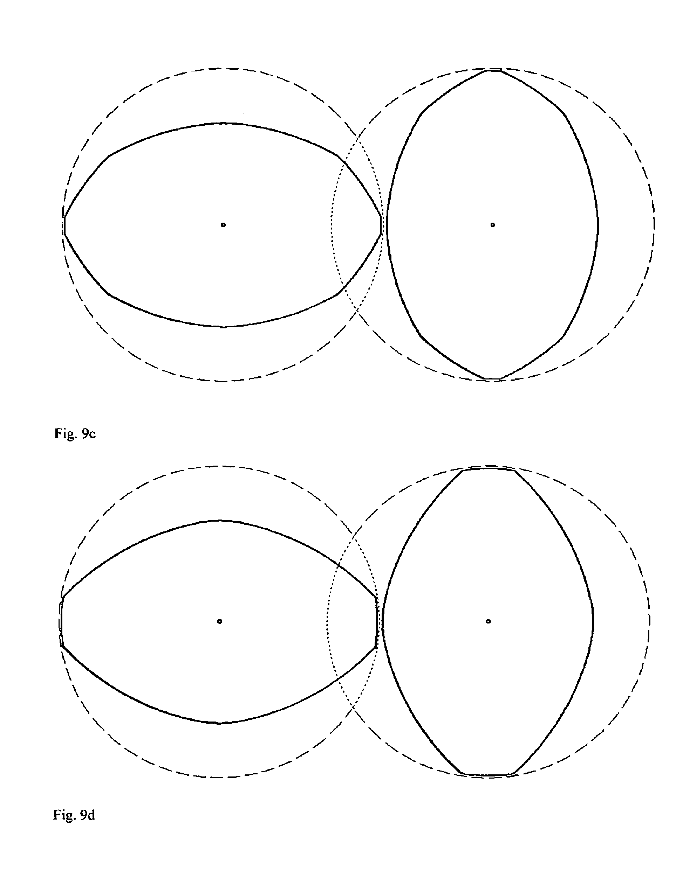

**Tabelle 1:** Geometrische Größen der Teilprofile X und Y erfindungsgemäßer Schneckenelemente, die in den Fig. 9a, 9b und 9c dargestellt sind.

| Radius | Winkel | x-Koordinate Anfangspunkt | y-Koordinate Anfangspunkt | x-Koordinate Mittelpunkt | y-Koordinate Mittelpunkt |
|--------|--------|---------------------------|---------------------------|--------------------------|--------------------------|
| 0.6 | 0.0799 | 0.6 | 0 | 0 | 0 |
| 0 | 0.3943 | 0.5981 | 0.0479 | 0.5981 | 0.0479 |
| 0.9 | 0.3112 | 0.5981 | 0.0479 | -0.2026 | -0.3631 |

Fig. 9b zeigt das exakt abschabende Profil, das sich aus der Fig. 9a durch erfindungsgemäße Spiegelung, Fortsetzung und Drehung ergibt. Der Kammwinkel *KW* der exakt abschabenden Schneckenkontur ist 0,1598. Die Summe aller Kammwinkel *SKW* ist 0,3196. Eine exakt abschabende Kontur nach dem Stand der Technik hat einen Kammwinkel *KW0* von 0,399 und eine Summe aller Kammwinkel *SKW0* von 0,799.

Fig. 9c zeigt ein Profil, das ausgehend von dem exakt abschabenden Profil in Fig. 9b nach der Methode der Raumäquidistante konstruiert wurde. Der Gehäusedurchmesser ist 0,61 und die Spiele zwischen Gehäuse und

Schnecke $\delta$ und zwischen Schnecke und Schnecke $s$ sind jeweils 0,02. Die Steigung ist 1,2.

Der ausgeführte Kammwinkel dieses Profils ist *KWA* = 0,208. Die Summe aller ausgeführten Kammwinkel *SKWA* ist 0,319.

Fig. 9d zeigt ein Profil entsprechend dem Stand der Technik, mit identischen Spielen und identischer Steigung wie in Fig. 9c. Das Profil hat einen ausgeführten Kammwinkel *KWA0* von 0,329 und eine Summe der ausgeführten Kammwinkel von 0,658.

Plastische Massen, die erfindungsgemäß mit hoher Effizienz bei gleichzeitiger Produktschonung extrudiert werden können , sind z.B. Suspensionen, Pasten, Glas, Keramische Massen, Metalle in Form einer Schmelze, Kunststoffe, Kunststoffschmelzen, Polymerlösungen, Elastomer- und Kautschuk-Massen.

Bevorzugt werden Kunststoffe und Polymerlösungen eingesetzt, besonders bevorzugt thermoplastische Polymere. Als thermoplastisches Polymer wird bevorzugt wenigstens eines aus der Reihe Polycarbonat, Polyamid, Polyester, insbesondere Polybutylenterephthalat und Polyethylenterephthalat, Polylactide, Polyether, thermoplastisches Polyurethan, Polyacetal, Fluorpolymer, insbesondere Polyvinylidenfluorid, Polyethersulfone, Polyolefin, insbesondere Polyethylen und Polypropylen, Polyimid, Polyacrylat, insbesondere Poly(methyl)methacrylat, Polyphenylenoxid, Polyphenylensulfid, Polyetherketon, Polyaryletherketon, Styrolpolymerisate, insbesondere Polystyrol, Styrolcopolymere, insbesondere Styrolacrylnitrilcopolymer, Acrylnitrilbutadienstyrolblockcopolymere und Polyvinylchlorid eingesetzt. Ebenso bevorzugt eingesetzt werden so genannte Blends aus den aufgeführten Kunststoffen, worunter der Fachmann eine Kombination aus zwei oder mehreren Kunststoffen versteht. Besonders bevorzugt sind Polycarbonat und Mischungen enthaltend Polycarbonat, ganz besonders bevorzugt Polycarbonat, beispielsweise erhalten nach dem Phasengrenzflächenverfahren oder dem Schmelzeumesterungsverfahren.

Weitere bevorzugte Einsatzmaterialien sind Kautschuke. Als Kautschuk wird bevorzugt wenigstens einer aus der Reihe Styrol-Butadien-Kautschuk, Naturkautschuk, Butatiden-Kautschuk, Isopren-Kautschuk, Ethylen-Propylen-Dien-Kautschuk, Ethylen-Propylen-Kautschuk, Butadien-Acrylnitril-Kautschuk, hydrierter Nitrilkautschuk, Butylkautschuk, Halobutylkautschuk, Chloropren-Kautschuk, Ethylen-Vinylacetat-Kautschuk, Polyurethan-Kautschuk, Thermoplastisches Polyurethan, Guttapercha, Arylatkautschuk, Fluorkautschuk, Siliconkautschuk, Sulfidkautschuk, Chlorsulfonyl-Polyäthylen-Kautschuk eingesetzt. Eine Kombination von zwei oder mehreren der aufgeführten Kautschuke, oder eine Kombination aus einem oder mehreren Kautschuk mit einem oder mehreren Kunststoffen ist natürlich auch möglich.

Diese Thermoplaste und Elastomere können in reiner Form oder als Mischungen mit Füll- und Verstärkungsstoffen, wie insbesondere Glasfasern, als Mischungen untereinander oder mit anderen Polymeren oder als Mischungen mit üblichen Polymeradditiven eingesetzt werden.

In einer bevorzugten Ausführungsform werden den plastischen Massen, insbesondere den Polymerschmelzen und Mischungen von Polymerschmelzen, Additive beigemengt. Diese können als Feststoffe, Flüssigkeiten oder Lösungen gemeinsam mit dem Polymer in den Extruder gegeben werden oder aber es wird wenigstens ein Teil der Additive oder alle Additive dem Extruder über einen Seitenstrom zugeführt.

Additive können einem Polymer vielfältige Eigenschaften verleihen. Dies können beispielsweise Farbmittel, Pigmente, Verarbeitungshilfsmittel, Füllstoffe, Antioxidantien, Verstärkungsstoffe, UV-Absorber und Lichtstabilisatoren, Metalldesaktivatoren, Peroxidfänger, basische Stabilisatoren, Keimbildner, als Stabilisatoren oder Antioxidatien wirksame Benzofurane und Indolinone, Formtrennmittel, flammhemmende Additive, antistatische Mittel, Färbemittel und Schmelzestabilisatoren. Beispielhaft für diese sind Ruß, Glasfaser, Ton, Glimmer, Graphitfaser, Titandioxid, Kohlenstofffasern, Kohlenstoffnanoröhrchen, ionische Flüssigkeiten und Naturfasern

Die Vorteile, die sich bei Einsatz des Verfahrens für die verschiedenen Polymere ergeben, sind je nach Art des Extrusionsprozesses und der Art der plastischen Masse unterschiedlich.

Bei der Extrusion von Polyethylen und Polyethylen-Copolymere zeigen sich bei zu hoher Temperatur Aufbau von Molekulargewicht, Verzweigung und Vernetzung. Weiterhin reagieren Polyethylen und Polyethylen-Copolymere mit Luftsauerstoff in dem dem Fachmann bekannten Autoxidationszyklus ([2] Hepperle,J.: Schädigungsmechanismen bei Polymeren. Polymeraufbereitung 2002, VDI-K, VDI-Verlag GmbH, [3] Zweifel, H.: Stabilization of Polymeric Materials. Berlin: Springer 1997, [4] Schwarzenbach, K., et al.: Antioxidants, in Zweifel, H. (Hrsg.): Plastics Additives Handbook. München: Hanser 2001, [5] Cheng, H.N., schilling, F.C., Bovey, F.A.: 13C Nuclear Magnetic Resonance Observation of the Oxidation of Polyethylene, Macromolecules 9 (1976) S. 363-365) unter Bildung von geruchsintensiven und daher störenden niedermolekularen Komponenten wie beispielsweise Ketone, Aldehyde, Carbonsäuren und Alkohole.

Bei der Extrusion von Copolymeren auf Basis Polyethylen und Vinylacetat bildet sich bei zu hoher Temperatur zusätzlich geruchsintensive und korrosive Essigsäure.

Bei der Extrusion von Polypropylen und Polypropylen-Copolymeren zeigt sich zu hoher Temperatur Abbau von Molekulargewicht. Weiterhin reagieren Polyproplyen und Polypropylen-Copolymere mit Luftsauerstoff in dem Autoxidationszyklus unter Bildung von geruchsintensiven und daher störenden niedermolekularen Komponenten wie beispielsweise Ketone, Aldehyde, Carbonsäuren und Alkohole.

Bei der Extrusion von Polyvinylchlorid spaltet bei zu hoher Temperatur Polyvinlychlorid unter Verfärbung korrosives Salzsäuregas ab, wobei die Salzsäure wiederum katalytisch bei der weiteren Abspaltung von Salzsäure wirkt.

Bei der Extrusion von Polystyrol bildet sich bei zu hoher Temperatur gesundheitsschädliches Styrol sowie dimeres und trimeres Styrol, mit Abbau von Molekulargewicht und entsprechendem Verschlechterung von mechanischen Eigenschaften.

Bei der Extrusion von Polystyrol-Acryinitril-Copolymer (SAN) verfärbt sich das Produkt unter thermischer Belastung zum Gelben hin, was zu verringerter Transparenz führt, und bildet das krebserregende Monomer Acrylnitril sowie Styrol, unter Abbau von Molekulargewicht und Verschlechterung von mechanischen Eigenschaften.

Bei der Extrusion von aromatische Polycarbonaten verfärbt sich unter zu hoher thermischer Belastung, insbesondere unter Sauerstoffeinfluss, zum Gelben hin, was zu verringerter Transparenz führt, und zeigt Abbau im Molekulargewicht, insbesondere unter Einfluss von Wasser. Auch werden unter erhöhter Temperatur Monomere wie z.B. Bisphenol A, zurückgespalten.

Bei der Extrusion von Polyestern wie z.B. Polyethylenterephtalat, Polybutylenterephtaltat, Polytrimethylenterepthalat oder Polylactiden ergibt sich unter zu hoher Temperatur und Wassereinfluss eine Verringerung im Molekulargewicht und Verschiebung der Endgruppen im Molekül. Dies ist vor allem beim Recycling von Polyethylenterephtalat problematisch. Polyethylenterephtalat spaltet bei hoher Temperatur Acetaldehyd ab, was beispielsweise zu Veränderungen an Geschmack in dem Inhalt von Getränkeflaschen führen kann.

Bei der Extrusion von mit Dienkautschuken, insbesondere mit Butadienkautschuk schlagzäh modifizierten Thermoplasten, insbesondere schlagzäh modifizierte Polystyroltypen (HIPS) und schlagzäh modifiziertes SAN (Acrylnitril-Butadien-Styrol, ABS) spaltet sich unter zu hoher Temperatur krebserregendes Butadien sowie giftiges Vinylcyclohexen ab. Weiterhin vernetzt der Dienkautschuk, so dass Verschlechterungen der mechanischen Eigenschaften des Produktes auftreten.

Bei der Extrusion von Polyoxymethylen spaltet sich bei zu hoher Temperatur giftiges Formaldehyd ab.

Bei der Extrusion von Polyamiden wie Polyamid 6, Polyamid 6,6, Polyamid 4,6, Polyamid 11 und Polyamid 12 führt zu hohe Temperatur zu Verfärbungen des Produktes und zu Molekulargewichtsabbau und zur Rückbildung von Monomeren und Dimeren und damit zu Verschlechterung von mechanischen Eigenschaften, vor allem in Gegenwart von Wasser.

Bei der Extrusion von thermoplastischen Polyurethanen führt zu hohe Temperatur zu Veränderungen der Molekülstruktur durch Umurethanisierung und, in Gegenwart von Wasser, zu Molekulargewichtsabbau. Beides beeinflusst die Eigenschaften des thermoplastischen Polyurethans in unerwünschter Weise.

Bei der Extrusion Polymethylmethacrylat spaltet bei zu hoher thermischer Belastung unter Abbau von Molekulargewicht Methylmethacrylat ab, was zu Geruchsbelästigung und zu verschlechterten mechanischen Eigenschaften führt.

Bei der Extrusion von Polyphenylensulfid werden bei zu hoher Temperatur schwefelhaltige organische und anorganische Verbindungen abgespalten, die zu Gerunchsbelästigung führen und zu Korrosion der Extrusionswerkzeuge führen kann. Auch werden hierbei niedermolekulare Oligomere und Monomere gebildet und Molekulargewicht abgebaut, was die mechanischen Eigenschaften von Polyphenylensulfid verschlechtert.

Bei der Extrusion von Polyphenylsulfon werden bei zu hoher Temperatur organische Verbindungen abgespalten, vor allem in Gegenwart von Wasser. Auch reduziert sich das Molekulargewicht, wodurch die mechanischen Eigenschaften verschlechtert werden.

Bei der Extrusion von Polyphenylenether werden bei zu hoher Temperatur niedermolekulare organische Verbindungen abgespalten, wobei sich das Molekulargewicht reduziert. Dies führt zu einer Verschlechterung der mechanischen Eigenschaften des Produktes.

Bei der Extrusion von Dien-Kautschuken wie beispielsweise Polybutadien (BR), Naturkautschuk (NR) und synthetisches Polyisopren (IR), Butylkautschuk (IIR), Chlorbutylkautschuk (CIIR), Brombutylkautschuk (BIIR), Styrol-Butadien-Kautschuk (SBR), Polychloropren (CR), Butadien-Acrylnitril-Kautschuk (NBR), teilweise hydrierter Butadien-Acrylnitril-Kautschuk (HNBR) sowie Ethylen-Proplyen-Dien-Copolymere (EPDM) bildet sich bei zu hoher Temperatur durch Vernetzung Gel, das zu Verschlechterung von mechanischen Eigenschaften der daraus hergestellten Bauteile führet. Bei Chlor- und Brombutylkautschuk kann unter erhöhter Temperatur korrosives Salzsäure- bzw. Bromwasserstoffgas abgespalten werden, das wiederum die weitere Zersetzung des Polymers katalysiert.

Bei der Extrusion von Kautschukmischungen, die Vulkanisatoren wie z.B. Schwefel oder Peroxide enthalten, werden durch zu hohe Temperaturen zum vorzeitigen Vulkanisieren gebracht. Dies führt dazu, dass aus diesen Kautschukmischungen keine Produkte mehr hergestellt werden können.

Bei der Extrusion von Mischungen aus einem oder mehreren Polymeren bei zu hohen Temperaturen treten jeweils die Nachteile der Extrusion der einzelnen Polymere auf.

Der Teilprozess der Entgasung von Polymeren bei der Herstellung wird auf sogenannten Entgasungsextrudern durchgeführt. Entgasungsextruder sind dem Fachmann im Prinzip bekannt und beispielsweise in [1] beschrieben. Kennzeichnend für Entgasungsextruder sind die sogenannten Entgasungsdome. Dies sind Gehäuse mit Öffnungen, durch die die enstehenden Brüden entweichen können. Verschiedene Entgasungsdome können bekanntlich bei verschiedenen Drücken betrieben werden, wenn zwischen den Entasungsdomen das Produkt abgestaut wird, so dass es eine Abdichtung zwischen den verschiedenen Drücken bildet.

Die erfindungsgemäßen Schneckenelemente werden bevorzugt in teilgefüllten Zonen und besonders bevorzugt in den Entgasungszonen eingesetzt.

Ein erfindungsgemäßer Entgasungsextruder kann auf verschiedene Art mit Produkt beschickt werden, abhängig von der Art, in der das Polymer anfällt. In einer bevorzugten Variante wird der Extruder mit einer flüssigen Phase beschickt, die neben dem Polymer noch Lösungsmittel und ggf. Restmonomere enthalten kann. Die Form, in der Polymere nach der Reaktion und ggf. einer Voreindampfung anfallen, sind dem Fachmann bekannt. Beispiele hierfür sind

- Polystyrol mit Rest-Styrol und evtl. Ethylbenzol, Toluol, Xylol, Butanon oder einem anderen Lösemittel

- Copolymer von Styrol und Acrylnitril mit Rest-Styrol, Rest-Acrylnitril, und evtl. Ethylbenzol, Toluol, Xylol, Butanon oder einem anderen Lösemittel

- Lineares Polyethylen niedriger oder hoher Dichte, verzweigtes Polyethylen mit Lösemittel wie Hexan, technisches Hexan, Propan, Isobutan und Monomeren wie Propylen, Buten-1, Hexen-1, 4-Methylpenten-1, Octen-1 (Prozesse mit Suspensionen sind: CX Prozess von Mitsui Chemicals (Hexan), Hostalen Prozess von Basell (Hexan), Chevron Philips USA (Isobutan), Borstar Prozess von Borealis (Propan) Belgien, und DSM nutz Hexan in einem Lösungsmittelprozess) Detail dazu sind in [6] (Comparative Analysis of Various Polyethylene Production Technologies, Chem. And Petroleum Eng. Vol. 44, Nos. 7-8, 2008) beschrieben

- Polycarbonat mit Lösemittel, z.B. Chlorbenzol und Methylenchlorid

- Polymethylmethacrylat mit Monmer, d.h. Methylmethacrylat

In einer bevorzugten Variante wird einem flüssig beschickter Entgasungsextruder mit einer sogenannten Rückwärtsentgasung das Produkt zugeführt. Dabei wird eine gegebenenfalls vorgeheizte Polymerlösung in einen Zweischneckenextruder eingebracht und schäumt dort auf. Die Gase werden dann durch die Gänge des Zweischneckenextruders rückwärts zu einem Entgasungsdom abgeführt. Allgemein ist eine derartige Rückwärtsentgasung Stand der Technik und z.B. in [1] auf den Seiten 193-195 beschrieben. Die Konzentration an Polycarbonat der Lösung beträgt in diesem Fall bei dem Eintritt in den Extruder bevorzugt zwischen 55 Masse-% und 95 Masse-%, besonders bevorzugt zwischen 65 Masse-% und 90 Masse-%.

In einer weiteren bevorzugten Variante, einem flüssig beschickten, den Entgasungsextruder das Produkt zuzuführen, besteht in einer Flashverdampfung am Eintritt des Extruders. Bevorzugt wird ein Flash direkt über dem Extruder, so dass die teilentgaste Schmelze direkt auf die Schneckenwellen fällt. Die bei dem Flash entstehenden Brüden werden bevorzugt aus einem Abscheidebehälter, der ebenfalls über dem Extruder liegt, mittels einer oder mehrerer Brüdenleitungen abgezogen. Die Temperatur der Polymerlösung beträgt bevorzugt im Bereich von 180°C bis 300°C, besonders bevorzugt zwischen 200°C und 250°C. Der Flash wird bevorzugt in einem Druckbereich zwischen 0,3 bar abs und 6 bar abs betrieben, besonders bevorzugt zwischen 0,5 bar abs und 2 bar abs.

In einer weiteren bevorzugten Variante, einem flüssig beschickten Entgasungsextruder Produkt zuzuführen, besteht in einem Rohrbündel-Wärmetauscher am Eintritt des Extruders, der oberhalb der Wellen des Extruders angeordnet ist, so dass die aus den Rohren austretende teilentgaste Polymerlösung direkt auf die Wellen fallen kann. Zwischen dem Austritt des Rohrbündel-Wärmetauscher und den Extruderwellen befindet sich noch ein Abscheidebehälter, in dem Brüden und Polymerlösung voneinander getrennt werden und der über mindestens einen Auslass für die Brüden verfügt. Die Polymerlösung wird durch eine Eintrittsöffnung am oberen Ende des Fallrohrverdampfers eingeleitet und über einen Verteilerboden einer Vielzahl von Rohren zugeführt, die von außen beheizt werden. Bevorzugt erfolgt die Beheizung über kondensierenden Wasserdampf, einen kondensierenden organischen Wärmeträger oder über einen flüssigen organischen Wärmeträger. Über die Innenoberfläche der Rohre wird die Wärmeenergie zur Verdampfung von Lösungsmittel in die Polycarbonatschmelze eingetragen. Dabei verdampfen Lösungsmittelanteile und bilden ein zweiphasiges Gas-Flüssig-Gemisch aus. So wird gezielt eine Überhitzung der Polymerschmelze vermieden. Das entweichende dampfförmige Lösungsmittel bewirkt eine ständige Durchmischung und Oberflächenerneuerung der Polymerschmelze, was deren effizientere Aufkonzentrierung bewirkt. Es wird auf diese Weise dem Ausdampfextruder eine deutlich höher konzentrierte Polycarbonatschmelze zugeführt, so dass sowohl die Energie-Eintragung als auch die Verweilzeit der Polycarbonatschmelze im Extruder geringer sein können, um die gleiche oder gar höhere Restentgasung der Polycarbonatschmelze zu bewirken. Bevorzugt ist die Konzentration der Polymer-Lösung im Eintritt in den Rohrbündel-Wärmetauscher zwischen 50 und 80 Gew-%. Die Heiztemperatur der Rohre beträgt von 240°C bis 360°C, bevorzugt von 250°C bis 340°C und ganz besonders bevorzugt von 260°C bis 300°C. Die Polymerkonzentration am Eintritt in den Extruder beträgt zwischen 80 und 99 Gew.%, bevorzugt 90 bis 99 Gew.%. Der Druck im Abscheidebehälter beträgt bevorzugt zwischen 0,3 bar abs und 6 bar abs, besonders bevorzugt zwischen 0,5 bar abs und 2 bar abs.

Eine weitere bevorzugte Art, einen flüssig beschickten Entgasungsextruder mit Produkt zu beschicken, besteht in einem Schaumverdampfer, wie er beispielsweise in der EP 1 740 638 für Polycarbonat beschrieben ist. Ein Schaumverdampfer kann aus beispielsweise aus einem Rohrbündel oder aus einer Düsenplatte bestehen. Aus den Öffnungen des Schaumverdampfers schäumt die Polymerschmelze auf und wird bis auf geringe Restgehalte von Restlösemittel befreit.

Dieser Schaumverdampfer ist bevorzugt oberhalb der Wellen des Extruders so angeordnet, dass die aus den Rohren austretende Polymerlösung direkt auf die Wellen fallen kann. Zwischen dem Austritt des Rohrbündel-Wärmetauscher und den Extruderwellen befindet sich noch ein Abscheidebehälter, in dem Brüden und Polymerlösung voneinander getrennt werden und der über mindestens einen Auslass für die Brüden verfügt.

Besonders bevorzugt wird als Polymerlösung eine Polycarbonatlösung eingesetzt.

In diesem Fall beträgt die Konzentration der Polycarbonatlösung im Eintritt des Schaumverdampfers zwischen 90 Gew% und 99,95 Gew-%. Optional ist der Polycarbonatlösung noch ein Schäumungsmittel wie beispielsweise Stickstoff, $CO_2$, zugegeben. Der Dampfdruck des Schäumungsmittels gemeinsam mit dem Rest-Lösemittel beträgt 0,1 bis 100 bar, bevorzugt 0,5 bis 60 bar und besonders bevorzugt 1 bis 40 bar. Der Druck im Abscheider beträgt Durch die Öffnungen des Schaumverdampfers wird die Polymerlösung in Teilströme zwischen 0,1 und 20 mbar aufgeteilt. Die Temperatur der Polymerlösung beträgt zwischen 250°C und 340°C. Der Druck im Abscheidebehälter beträgt bevorzugt zwischen 0,1 und 20 mbar.

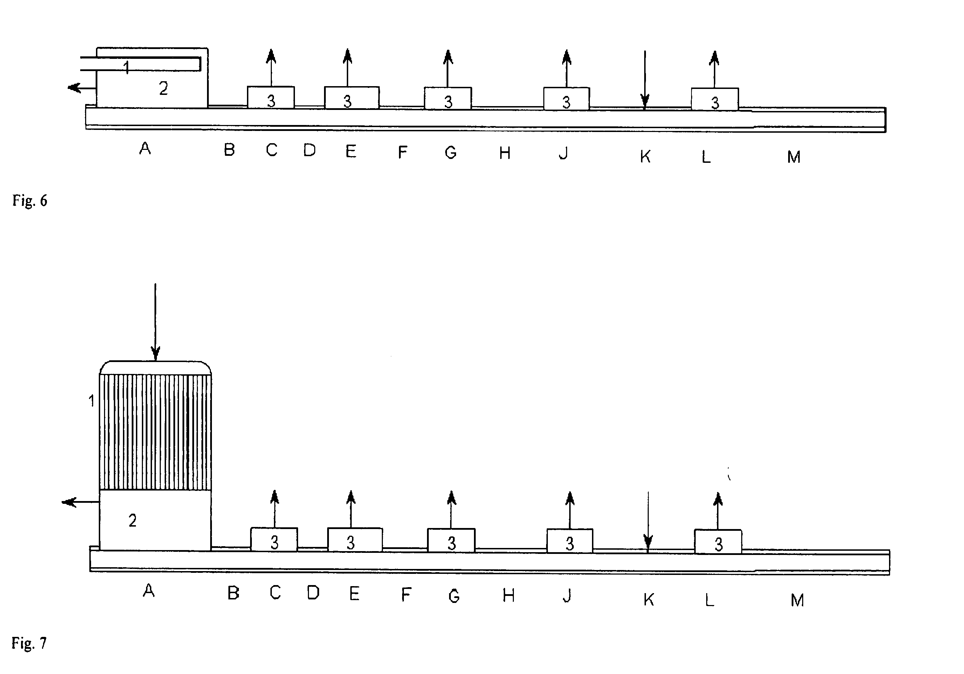

Fig. 6 zeigt einen erfindungsgemäßen Entgasungsextruder. In der Zone A wird durch ein Flashrohr 1 die Polycarbonat-Lösung dem Extruder zugegeben. Die Brüden werden im Entgasungsbehälter 2 von der Polycarbonatlösung getrennt. Zonen C, E, G J und L sind Entgasungszonen. Die dort freiwerdenden Brüden werden in den Entgasungsdomen 3 abgezogen. Zonen B, D, F und H sind Stauzonen, bei denen durch ein abstauendes Element ein Produktpropfen erzeugt wird, der die Einstellung von unterschiedlichen Drücken in den jeweils benachbarten Zonen ermöglicht. In Zone K wird zusätzlich Schleppmittel zugegeben, um die Entgasung in Zone L effektiver zu gestalten. In Zone M wird das Polymer mit einem Seitenstrom mit Additiven vermischt und der Druck für die Filtrierung und Düse, die auf den Extruder folgen, aufgebaut.

Fig. 7 zeigt einen weiteren erfindungsgemäßen Entgasungsextruder. In der Zone A wird durch einen vertikalen Vorwärmer 1 die Polycarbonat-Lösung dem Extruder zugegeben. Die Brüden werden im Entgasungsbehälter 2 von der Polycarbonatlösung getrennt. Zonen C, E, G J und L sind Entgasungszonen. Die dort freiwerdenden Brüden werden in den Entgasungsdomen 3 abgezogen. Zonen B, D, F und H sind Stauzonen, bei denen durch ein abstauendes Element ein Produktpropfen erzeugt wird, der die Einstellung von unterschiedlichen Drücken in den jeweils benachbarten Zonen ermöglicht. In Zone K wird zusätzlich Schleppmittel zugegeben, um die Entgasung in Zone L effektiver zu gestalten. In Zone M wird das Polymer mit einem Seitenstrom mit Additiven vermischt und der Druck für die Filtrierung und Düse, die auf den Extruder folgen, aufgebaut.

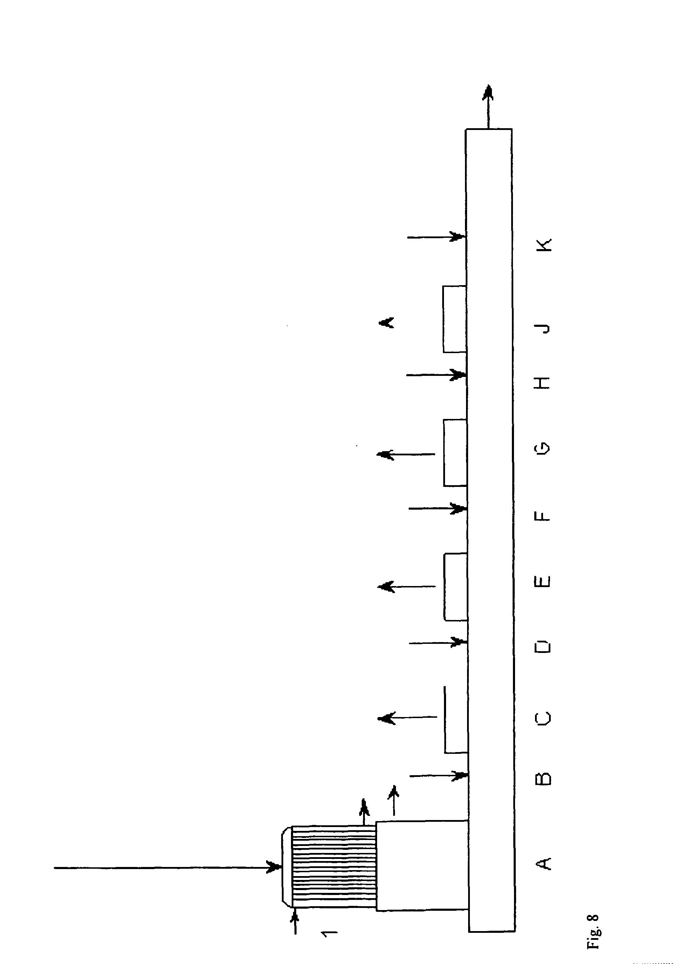

Fig. 8 zeigt einen weiteren erfindungsgemäßen Entgasungsextruder mit einem Schaumverdampfer am Eintritt. In der Zone A wird durch einen Schaumverdampfer 1 die Polycarbonat-Lösung dem Extruder zugegeben. Die Brüden werden im Abscheider 2 von der Polycarbonatlösung getrennt. In den Zonen B, D, F und H wird jeweils Schleppmittel zugegeben und dispergiert. In den Zonen C, E, F, G und J werden die flüchtigen Bestandteile vom Polymer getrennt. In der In Zone K wird das Polymer mit einem Seitenstrom mit Additiven und ggf. weiterem Polymer vermischt und der Druck für die Filtrierung und Düse, die auf den Extruder folgen, aufgebaut. Ein erfindungsgemäßer Zwei- oder Mehrwellenextruder kann bei der Herstellung von Polymeren auch mit Partikeln beschickt werden. In diesem Fall dient ein erfindungsgemäßer Extruder vor allem zum Aufschmelzen, zur Konfektionierung und zum Mischen mit Additiven. Die Form, in der die Polymere nach der Reaktion und ggf. einer Voreindampfung oder Fällung anfallen, sind dem Fachmann bekannt. Beispiele hierfür sind

- Polypropylen, bei dem das Polymer in Form von Pulver nach der letzten Reaktion anfällt

- Polyethylen hoher Dichte aus einem Gasphasen- oder Slurryprozess

- Emulsionspolymerisate wie beispielsweise Acrylnitril-Butadien-Styrol nach der Fällung und ggf. Trocknung

Bei der Aufarbeitung eignet sich ein erfindungsgemäßer Doppel- oder Mehrwellenextruder besonders für Aufgaben mit Entgasung. Besondere Vorteile ergeben sich dabei bei der direkten Aufarbeitung von Recycling -Polyethylenterepthalat aus Flaschenware, die eine Entgasung bei minimaler Temperaturbelastung erfolgt.

Besonders bevorzugt wird das erfindungsgemäße Verfahren bei der Herstellung und der Compoundierung von Polycarbonat angewendet. Hierbei bietet es Vorteile vor allem bei der Farbe des Polycarbonats, bei nicht eingefärbtem Polycarbonat gemessen mit dem Yellowness Index (YI). Die erfindungsgemäßen Schneckenelemente werden hierbei besonders bevorzugt in der Entgasungszone eingesetzt.

Für das erfindungsgemäße Verfahren geeignete Diphenole zur Herstellung von Polycarbonat sind im Stand der Technik vielfach beschrieben.

Geeignete Diphenole sind beispielsweise Hydrochinon, Resorcin, Dihydroxydiphenyl, Bis-(hydroxyphenyl)-alkane, Bis(hydroxy-phenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol und 1,1-Bis-(4-hydroxyphenyl)-3,3,5-trimethylcyclohexan (Bisphenol TMC).

Besonders bevorzugte Diphenole sind 4,4'-Dihydroxydiphenyl, 1,1-Bis-(4-hydroxyphenyl)-phenyl-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).

Im Falle der Homopolycarbonate wird nur ein Diphenol eingesetzt, im Falle der Copolycarbonate werden mehrere Diphenole eingesetzt, wobei selbstverständlich die verwendeten Diphenole, wie auch alle anderen der Synthese zugesetzten Chemikalien und Hilfsstoffe mit den aus ihrer eigenen Synthese, Handhabung und Lagerung stammenden Verunreinigungen kontaminiert sein können, obwohl es wünschenswert ist, mit möglichst sauberen Rohstoffen zu arbeiten.

Die zur Regelung des Molekulargewichtes benötigten monofunktionellen Kettenabbrecher, wie beispielsweise Phenol oder Alkylphenole, insbesondere Phenol, p-tert. Butylphenol, isoOctylphenol, Cumylphenol, deren Chlorkohlensäureester oder Säurechloride von Monocarbonsäuren bzw. Gemischen aus diesen Kettenabbrechern, werden entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind bzw., im Falle der Säurechloride und Chlorkohlensäureester als Kettenabbrecher, solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wo kein Phosgen mehr vorliegt, aber der Katalysator noch nicht dosiert wurde. Alternativ können sie auch vor dem Katalysator, mit dem Katalysator zusammen oder parallel zudosiert werden.

In der gleichen Weise werden ggf. Verzweiger oder Verzweigermischungen der Synthese zugesetzt. Üblicherweise werden Verzweiger jedoch vor den Kettenabbrechern zugesetzt. In der Regel werden Trisphenole, Quarterphenole oder Säurechloride von Tri- oder Tetracarbonsäuren oder Gemische der Polyphenole oder der Säurechloride verwendet. Einige der als Verzweiger geeignete Verbindungen mit drei oder mehr als drei phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-(4,4-bis-(4-hydroxyphenyl)-cyclohexyl]-propan, 2,4-Bis-(4-hydroxyphenyl-isopropyl)-phenol, Tetra-(4-hydroxyphenyl)-methan.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die in der Phasengrenzflächensynthese von Polycarbonat bevorzugt verwendeten Katalysatoren sind tertiäre Amine, insbesondere Triethylamin, Tributylamin, Trioctylamin, N-Ethylpiperidin, N-Methylpiperidin, N-i/n-Propylpiperidin, quartäre Ammoniumsalze wie Tetrabutylammonium-, Tributylbenzylammonium-, Tetraethylammonium-hydroxid, -chlorid, -bromid, -hydrogensulfat, - tetrafluoroborat, sowie die den Ammoniumverbindungen entsprechenden Phosphoniumverbindungen. Diese Verbindungen sind als typische Phasengrenzflächenkatalysatoren in der Literatur beschrieben, kommerziell erhältlich und dem Fachmann geläufig. Die Katalysatoren können einzeln, im Gemisch oder auch neben- und nacheinander der Synthese zugesetzt werden, gegebenenfalls auch vor der Phosgenierung, bevorzugt sind jedoch Dosierungen nach der Phosgeneintragung, es sei denn, es werden eine Oniumverbindung oder ein Gemisch aus Oniumverbindungen als Katalysatoren verwendet. In diesem Fall ist eine Zugabe vor der Phosgendosierung bevorzugt. Die Dosierung des Katalysators oder der Katalysatoren kann in Substanz, in einem inerten Lösungsmittel, vorzugsweise dem Lösungsmittel der Polycarbonatsynthese oder auch als wässrige Lösung, im Falle der tert. Amine dann als deren Ammoniumsalze mit Säuren, bevorzugt Mineralsäuren, insbesondere Salzsäure, erfolgen. Bei Verwendung mehrerer Katalysatoren oder der Dosierung von Teilmengen der Katalysatorgesamtmenge können natürlich auch unterschiedliche Dosierungsweisen an verschiedenen Orten oder zu verschiedenen Zeiten vorgenommen werden. Die Gesamtmenge der verwendeten Katalysatoren liegt bei 0,001 bis 10 Mol-% bezogen auf Mole eingesetzte Bisphenole, bevorzugt 0,01 bis 8 Mol-%, besonders bevorzugt 0,05 bis 5 Mol-%.

Die Durchführung der Polycarbonatsynthese kann kontinuierlich oder diskontinuierlich geschehen. Die Reaktion kann daher in Rührkesseln, Rohrreaktoren, Umpumpreaktoren oder Rührkesselkaskaden oder Kombinationen daraus erfolgen. Dabei ist durch Verwendung der bereits erwähnten Mischorgane sicherzustellen, dass wässrige und organische Phase sich möglichst erst dann entmischen, wenn das Synthesegemisch ausreagiert hat, d.h. kein verseifbares Chlor von Phosgen oder Chlorkohlensäureestern mehr enthält.

Nach Eintrag des Phosgens kann es vorteilhaft sein, eine gewisse Zeit die organische Phase und die wässrige Phase zu durchmischen, bevor gegebenenfalls Verzweiger, sofern dieser nicht gemeinsam mit dem Bisphenolat dosiert wird, Kettenabbrecher und Katalysator zugegeben werden. Eine derartige Nachreaktionszeit kann nach jeder Dosierung von Vorteil sein. Diese Nachrührzeiten liegen bei 10 Sekunden bis 60 Minuten, bevorzugt 30 Sekunden bis 40 Minuten, besonders bevorzugt 1 bis 15 Minuten.

Die organische Phase kann aus einem Lösungsmittel oder Mischungen mehrerer Lösungsmittel bestehen. Geeignete Lösungsmittel sind chlorierte Kohlenwasserstoffe (aliphatische und/oder aromatische), bevorzugt Dichlormethan, Trichlorethylen, 1,1,1-Trichlorethan, 1,1,2- Trichlorethan und Chlorbenzol und deren Gemische. Es können jedoch auch aromatische Kohlenwasserstoffe wie Benzol, Toluol, m/p/o-Xylol oder aromatische Ether wie Anisol allein, im Gemisch mit oder zusätzlich zu chlorierten Kohlenwasserstoffen verwendet werden. Eine andere Ausführungsform der Synthese verwendet Lösungsmittel, welche Polycarbonat nicht lösen, sondern nur anquellen. Es können daher auch Nichtlösungsmittel für Polycarbonat in Kombination mit Lösungsmitteln verwendet werden. Dabei können als Lösungsmittel auch in der wässrigen Phase lösliche Lösungsmittel wie Tetrahydrofuran, 1,3/1,4-Dioxan oder 1,3-Dioxolan verwendet werden, wenn der Lösungsmittelpartner die zweite organische Phase bildet.

Das ausreagierte, höchstens noch Spuren (<2 ppm) an Chlorkohlensäureestern enthaltende mindestens zweiphasige Reaktionsgemisch lässt man zur Phasentrennung absitzen. Die wässrige alkalische Phase wird evtl. ganz oder teilweise zurück in die Polycarbonatsynthese als wässrige Phase geleitet oder aber der Abwasseraufarbeitung zugeführt, wo Lösungsmittel- und Katalysatoranteile abgetrennt und rückgeführt werden. In einer anderen Variante der Aufarbeitung wird nach Abtrennung der organischen Verunreinigungen, insbesondere von Lösungsmitteln und Polymerresten, und gegebenenfalls nach der Einstellung eines bestimmten pH-Wertes, z.B. durch Natronlaugezugabe, das Salz abgetrennt, welches z.B. der Chloralkalielektrolyse zugeführt werden kann, während die wässrige Phase gegebenenfalls wieder der Synthese zugeführt wird.

Die organische, das Polycarbonat enthaltende Phase kann nun von allen Kontaminationen alkalischer, ionischer oder katalytischer Art gereinigt werden. Die organische Phase enthält auch nach einem oder mehreren Absetzvorgängen noch Anteile der wässrigen alkalischen Phase in feinen Tröpfchen sowie den Katalysator, in der Regel ein tert. Amin. Die Absetzvorgänge können gegebenenfalls dadurch unterstützt werden, dass die organische Phase Absetzkessel, Rührkessel, Coalescer oder Separatoren bzw. Kombinationen daraus durchläuft, wobei gegebenenfalls Wasser in jedem oder einigen Trennschritten unter Umständen unter Verwendung von aktiven oder passiven Mischorganen zudosiert werden kann.

Nach dieser groben Abtrennung der alkalischen, wässrigen Phase wird die organische Phase ein oder mehrmals mit verdünnten Säuren, Mineral-, Carbon- Hydroxycarbon- und/oder Sulfonsäuren gewaschen. Bevorzugt sind wässrige Mineralsäuren insbesondere Salzsäure, phosphorige Säure und Phosphorsäure oder Mischungen dieser Säuren. Die Konzentration dieser Säuren sollte im Bereich 0,001 bis 50 Gew.-%, bevorzugt 0,01 bis 5 Gew.-% liegen.

Weiterhin wird die organische Phase mit entsalztem oder destilliertem Wasser wiederholt gewaschen. Die Abtrennung der, gegebenenfalls mit Teilen der wässrigen Phase dispergierten, organischen Phase nach den einzelnen Waschschritten geschieht mittels Absetzkessel, Rührkessel, Coalescer oder Separatoren bzw. Kombinationen daraus, wobei das Waschwasser zwischen den Waschschritten gegebenenfalls unter Verwendung von aktiven oder passiven Mischorganen zudosiert werden kann.

Zwischen diesen Waschschritten oder auch nach der Wäsche können ggf. Säuren, vorzugsweise gelöst im Lösungsmittel, welches der Polymerlösung zugrunde liegt, zugegeben werden. Bevorzugt werden hier Chlorwasserstoffgas und Phosphorsäure oder phosphorige Säure verwendet, die ggf. auch als Mischungen eingesetzt werden können.

Diese gereinigte Lösung wird dann im folgenden Schritt dem erfindungsgemäßen Ausdampfextruder mit besonderen Schneckengeometrien zugeführt.

Die nach dem erfindungsgemäßen Verfahren erhaltenen Polycarbonate können zur Veränderung von Eigenschaften mit den üblichen Additiven und Zusatzstoffen (z.B. Hilfs- und Verstärkungsstoffe) versehen werden. Der Zusatz von Additiven und Zuschlagsstoffen dient der Verlängerung der Nutzungsdauer (z.B. Hydrolyse- oder Abbaustabilisatoren), der Verbesserung der Farbstabilität (z.B. Thermo- und UV-Stabilisatoren), der Vereinfachung der Verarbeitung (z.B. Entformer, Fließhilfsmittel), der Verbesserung der Gebrauchseigenschaften (z.B. Antistatika), der Verbesserung des Flammschutzes, der Beeinflussung des optischen Eindrucks (z.B. organische Farbmittel, Pigmente) oder der Anpassung der Polymereigenschaften an bestimmte Belastungen (Schlagzähmodifikatoren, fein zerteilte Mineralien, Faserstoffe, Quarzmehl, Glas- und Kohlenstofffasern).

Nachfolgend wird die Erfindung anhand einer ein Ausführungsbeispiel darstellenden Fig. 1 näher erläutert.

Die Polymerlösung wird durch eine Zuführung 1 dem nach unten offenen Rohrbündelwärmetauscher 2 zugeführt. Der Rohrbündelwärmetauscher wird mit Heizmedium beheizt, das bei 3 zu- und bei 4 abgeführt wird. Am Ende der Rohre entspannt die Polymerlösung in den Abscheidebehälter 5, der direkt über dem Extruder angeordnet ist. Das freigesetzte Gas wird über die Brüdenleitung 6 abgeführt. Das Produkt fällt direkt in die Einzugszone 7 des Extruders und wird durch eine Abdichtungszone 8 der ersten Entgasungszone 9 zugeführt, die über einen Entgasungsdom 10 verfügt. Danach folgen weitere Stauzonen 8 und Entgasungszonen 9. Vor dem letzten Entgasungsdom wird in der Knetzone 11 über die Zugabestelle 12 Stickstoff zugegeben. Bei der Zugabestelle 13 werden noch Additive und ggf. aufgeschmolzenes Polymer zugegeben, die in der Druckaufbau- und Mischzone 14 mit dem Polymerstrom vermischt werden.

Die folgenden Beispiele dienen der exemplarischen Erläuterung der Erfindung und sind nicht als Beschränkung aufzufassen.

Die relative Viskosität von Polycarbonat wird als Verhältnis aus der Viskosität einer Polymerlösung und der Viskosität des reinen Lösungsmittels bestimmt. Sie wird generell in Dichlormethan bei einer Konzentration von 5 g Polymer auf ein Liter Lösungsmittel bei 25 °C ermittelt.

**Vergleichsbeispiel 1**

6750 kg/h einer Lösung mit 65% Polycarbonat werden in einen Entgasungsextruder nach Fig. 6 eingespeist. Die Temperatur der Lösung vor dem Flash beträgt 230°C. Alle Zonen sind mit Schneckenelementen nach dem Stand der Technik ausgeführt. Zonen A bis L sind mit zweigängigen Elementen ausgeführt, Zone M mit dreigängigen Elementen. Die relative Lösungsviskosität des Polycarbonates beträgt 1,295. Die Drehzahl des Extruders beträgt 350/min. Der Druck am Eintritt (Zone A) beträgt 1,4 bar abs, der Druck in den Zonen C, E, G, J und L wird schrittweise von 1 bar abs auf 5 mbar abs abgesenkt. In der Zone K wird 15 Kilogramm pro Stunde Stickstoff als Schleppmittel zugegeben und dispergiert.

Die Temperatur nach dem Ausdampfextruder ist 398,4°C, der Restgehalt an Chlorbenzol kleiner als 400 ppm. Der Yellowness Index beträgt 1,9.

**Beispiel 2**

6750 kg/h einer Lösung mit 65% Polycarbonat werden in einen Entgasungsextruder nach Fig. 6 eingespeist. Die Temperatur der Lösung vor dem Flash beträgt 230°C. Die Zonen A, B, C, D, E, F, G und M sind mit Schneckenelementen nach dem Stand der Technik ausgeführt. Die Zonen J, K und L sind mit erfindungsgemäßen Schneckenelementen ausgerüstet. Die relative Lösungsviskosität des Polycarbonates beträgt 1,295. Die Drehzahl des Extruders beträgt 350/min. Der Druck am Eintritt (Zone A) beträgt 1,4 bar abs, der Druck in den Zonen C, E, G, J und L wird schrittweise von 1 bar abs auf 5 mbar abs abgesenkt. In der Zone K wird 15 Kilogramm pro Stunde Stickstoff als Schleppmittel zugegeben und dispergiert.

Die Temperatur nach dem Ausdampfextruder ist 386.7 C, der Restgehalt an Chlorbenzol kleiner als 400 ppm. Der Yellowness Index beträgt 1,5.

**Vergleichsbeispiel 3**

7500 kg/h einer Lösung mit 65% Polycarbonat werden in einen Entgasungsextruder nach Fig. 7 eingespeist. Die Lösung wird vor dem Eintritt in den Extruder mit einem Rohrbündelwärmetauscher 1 vorgewärmt. Alle Zonen sind mit Schneckenelementen nach dem Stand der Technik ausgeführt. Zonen A bis L sind mit zweigängigen Elementen ausgeführt, Zone M mit dreigängigen Elementen. Die relative Lösungsviskosität des Polycarbonates beträgt 1,295. Die Drehzahl des Extruders beträgt 350/min. Der Druck am Eintritt (Zone A) beträgt 1,4 bar abs, der Druck in den Zonen C, E, G, J und L wird schrittweise von 1 bar abs auf 5 mbar abs abgesenkt. In der Zone K wird 15 Kilogramm pro Stunde Stickstoff als Schleppmittel zugegeben und dispergiert.

Die Temperatur nach dem Ausdampfextruder ist 399,2°C, der Restgehalt an Chlorbenzol kleiner als 400 ppm, und der Yellowness Index beträgt 2,2.

**Beispiel 4**

7500 kg/h einer Lösung mit 65% Polycarbonat werden in einen Entgasungsextruder nach Fig. 6 eingespeist. Die Temperatur der Lösung vor dem Flash beträgt 230°C. Die Zonen A, B, C, D, E, F, G und M sind mit Schneckenelementen nach dem Stand der Technik ausgeführt. Die Zonen J, K und L sind mit erfindungsgemäßen Schneckenelementen ausgerüstet. Die relative Lösungsviskosität des Polycarbonates beträgt 1,295. Die Drehzahl des Extruders beträgt 350/min. Der Druck am Eintritt (Zone A) beträgt 1,4 bar abs, der Druck in den Zonen C, E, G, J und L wird schrittweise von 1 bar abs auf 5 mbar abs abgesenkt. In der Zone K wird 15 Kilogramm pro Stunde Stickstoff als Schleppmittel zugegeben und dispergiert.

Die Temperatur nach dem Ausdampfextruder ist 388°C, der Restgehalt an Chlorbenzol kleiner als 400 ppm, und der Yellowness Index beträgt 1,7.

**Patentansprüche**

1. Verfahren zur Extrusion von plastischen Massen unter Verwendung von Schneckenelementen für mehrwellige Schneckenmaschinen mit paarweise gleichsinnigen und paarweise exakt abschabenden Schneckenwellen, mit zwei oder mehr Schneckengängen $Z$, mit Achsabstand A und Außendurchmesser $DE$, **dadurch gekennzeichnet,**

   **dass** die Summe der Kammwinkel eines Elementepaares größer als 0 und kleiner ist als $2\pi - 4Z \arccos\left(\dfrac{A}{DE}\right)$

   und zwischen Schneckenelementen und Gehäuse und/oder zwischen benachbarten Schneckenelementen Spiele im Bereich von 0,1 bis 0,001 bezogen auf den Durchmesser des Schneckenprofils aufweisen.

2. Verfahren gemäß Anspruch 1, **dadurch gekennzeichnet, dass** sich die Profile der Schneckenelemente von erzeugendem und erzeugtem Schneckenprofil jeweils aus 6*Z oder mehr Kreisbögen mit einem Radius größer oder gleich Null und kleiner oder gleich A zusammensetzen, wobei die Kreisbögen an ihren Endpunkten tangential ineinander übergeben.

3. Verfahren gemäß Anspruch 2, **dadurch gekennzeichnet, dass** jeweils ein Paar der Schneckenelemente von so genannten korrespondierenden Kreisbögen des erzeugten und erzeugenden Schneckenprofils **dadurch gekennzeichnet ist, dass**

   - die Winkel von korrespondierenden Kreisbögen gleich groß sind,
   - die Summe der Radien korrespondierender Kreisbögen gleich dem Achsabstand Ist,
   - je eine der Verbindungslinien zwischen dem Mittelpunkt des Kreisbogens des erzeugenden Schneckenprofils und dessen Endpunkten parallel zu je einer der Verbindungslinien zwischen dem Mittelpunkt des korrespondierenden Kreisbogens des erzeugten Schneckenprofils und dessen Endpunkten verläuft,
   - die Richtungen, in denen die Endpunkte des Kreisbogens des erzeugenden Schneckenprofils vom Mittelpunkt des Kreisbogens aus liegen, jeweils entgegengesetzt sind zu den Richtungen, in denen die Endpunkte des korrespondierenden Kreisbogens des erzeugten Schneckenprofils vom Mittelpunkt des Kreisbogens des erzeugten Schneckenprofils aus liegen,
   - der Mittelpunkt des Kreisbogens des erzeugenden Schneckenprofils einen Abstand zum Mittelpunkt des korrespondierenden Kreisbogens des erzeugten Schneckenprofil hat, der dem Achsabstand entspricht,
   - die Verbindungslinie zwischen dem Mittelpunkt des Kreisbogens des erzeugenden Schneckenprofils und dem Mittelpunkt des korrespondierenden Kreisbogens des erzeugten Schneckenprofile parallel zu der Verbindungslinie zwischen dem Drehpunkt des erzeugenden Schneckenprofils und dem Drehpunkt des erzeugten Schneckenprofils ist,
   - die Richtung, in die der Mittelpunkt des Kreisbogens des erzeugenden Schneckenprofils verschoben werden müsste, um mit dem Mittelpunkt des korrespondierenden Kreisbogens des erzeugten Schneckenprofils zur Deckung gebracht zu werden, die gleiche ist, in die der Drehpunkt des erzeugenden Schneckenprofils verschoben werden müsste, um mit dem Drehpunkt des erzeugten Schneckenprofils zur Deckung gebracht zu werden.

4. Verfahren gemäß einem der voranstehenden Ansprüche, **dadurch gekennzeichnet, dass** an mindestens einem Kammbogen eines Profils der Schneckenelemente ein Kreisbogen mit Radius 0 anschließt.

5. Verfahren gemäß einem der voranstehenden Ansprüche, **dadurch gekennzeichnet, dass** an mindestens einem Kammbogen eines Profils der Schneckenelemente ein Kreisbogen mit Radius > 0 und kleiner als 0,1 mal dem Schneckendurchmesser anschließt.

6. Verfahren gemäß einem der voranstehenden Ansprüche, **dadurch gekennzeichnet, dass** sich Kammbögen und Nutbögen der Schneckenelemente beim Umlauf um ein Profil abwechseln.

7. Verfahren gemäß einem der voranstehenden Ansprüche, **dadurch gekennzeichnet, dass** die Schneckenelemente eine Anzahl von Symmetrieachsen haben, die denen der Gangzahl entspricht.

8. Verfahren gemäß einem der voranstehenden Ansprüchen, **dadurch gekennzeichnet, dass** die Schneckenelemente eine Punktsymmetrie, aber keine Spiegelsymmetrie haben.

9. Verfahren gemäß einem der voranstehenden Ansprüchen, **dadurch gekennzeichnet, dass** die Schneckenelemente als Förderelemente ausgeführt sind.

10. Verfahren gemäß einem der voranstehenden Ansprüche, **dadurch gekennzeichnet, dass** die Schneckenelemente in einer Entgasungs- oder Förderzone eingesetzt werden.

11. Verfahren gemäß einem der voranstehenden Ansprüche, **dadurch gekennzeichnet, dass** die plastischen Massen Thermpolaste oder Elastomere sind.

12. Verfahren gemäß Anspruch 11 **dadurch gekennzeichnet, dass** als Thermoplaste Polycarbonat, Polyamid, Polyester, insbesondere Polybutylenterephthalat und Polyethylenterephthalat, Polyether, thermoplastisches Polyurethan, Polyacetal, Fluorpolymer, insbesondere Polyvinylidenfluorid, Polyethersulfone, Polyolefin, insbesondere Polyethylen und Polypropylen, Polyimid, Polyacrylat, insbesondere Poly(methyl)methacrylat, Polyphenylenoxid, Polyphenylensulfid, Polyetherketon, Polyaryletherketon, Styrolpolymerisate, insbesondere Polystyrol, Styrolcopolymere, insbesondere Styrolacrylnitrilcopolymer, Acrylnitrilbutadienstyrolblockcopolymere, Polyvinylchlorid oder ein Blend von mindestens zwei der genannten Thermoplaste eingesetzt wird.

13. Verfahren nach Anspruch 12, **dadurch gekennzeichnet, dass** als Thermoplast Polycarbonat oder ein Blend von Polycarbonat mit anderen Polymeren eingesetzt wird.

14. Verfahren gemäß Anspruch 13, **dadurch gekennzeichnet, dass** das Polycarbonat nach dem Grenzflächenverfahren oder dem Schmelzeumesterungsverfahren hergestellt wurde.

15. Verfahren gemäß Anspruch 13 **dadurch gekennzeichnet, dass** als Elastomer Styrol-Butadien-Kautschuk, Naturkautschuk, Butatiden-Kautschuk, Isopren-Kautschuk, Ethylen-Propylen-Dien-Kautschuk, Ethylen-Propylen-Kautschuk, Butadien-Acrylnitril-Kautschuk, hydrierter Nitrilkautschuk, Butylkautschuk, Halobutylkautschuk, Chloropren-Kautschuk, Ethylen-Vinylacetat-Kautschuk, Polyurethan-Kautschuk, Thermoplastisches Polyurethan, Guttapercha, Arylatkautschuk, Fluorkautschuk, Siliconkautschuk, Sulfidkautschuk, Chlorsulfonyl-Polyäthylen-Kautschuk oder eine Kombination von mindestens zwei der genannten Elastomere eingesetzt wird.

16. Verfahren gemäß einem der vor voranstehenden Ansprüche, **dadurch gekennzeichnet, dass** dem Polymer Füll- oder Verstärkungsstoffe oder Polymeradditive oder organische oder anorganische Pigmente, oder Mischungen davon, zugesetzt werden.

**Claims**

1. Process for extruding plastic compositions using screw elements for multi-screw extruders with screws corotating in pairs and being fully self-wiping in pairs, with two or more screw flights Z, with centreline distance A and outer diameter *DE,* **characterized in that** the total of the tip angles of a pair of elements is greater than zero and smaller

than $2\pi - 4\,Z\arccos\left(\dfrac{A}{DE}\right)$ and clearances in the range from 0.1 to 0.001 relative to the diameter of the screw profile have between screw elements and barrel and/or between neighboring screw elements.

2. Process according to Claim 1, **characterized in that** in each case the profiles of the screw elements of generating and generated screw profile are composed of 6*Z or more circular arcs with a radius greater than or equal to zero and smaller than or equal to A, where the circular arcs merge tangentially into one another at their end points.

3. Process according to Claim 2, **characterized in that** in each case a pair of the screw elements of what are known as corresponding circular arcs of the generated and generating screw profile is **characterized in that**

    - the angles of corresponding circular arcs are of identical magnitude,
    - the total of the radii of corresponding circular arcs is equal to the centreline distance,

- respectively one of the connecting lines between the centre point of the circular arc of the generating screw profile and end points thereof runs parallel to respectively one of the connecting lines between the centre point of the corresponding circular arc of the generated screw profile and end points thereof,

- the directions in which the end points of the circular arc of the generating screw profile lie, starting from the centre point of the circular arc, are in each case opposite to the directions in which the end points of the corresponding circular arc of the generated screw profile lie, starting from the centre point of the circular arc of the generated screw profile,

- the distance between the centre point of the circular arc of the generating screw profile and the centre point of the corresponding circular arc of the generated screw profile corresponds to the centreline distance,

- the connecting line between the centre point of the circular arc of the generating screw profile and the centre point of the corresponding circular arc of the generated screw profile is parallel to the connecting line between the point of rotation of the generating screw profile and the point of rotation of the generated screw profile,

- the direction in which the centre point of the circular arc of the generating screw profile would have to shift in order to be the same as the centre point of the corresponding circular arc of the generated screw profile is the same as that in which the point of rotation of the generating screw profile would have to shift in order to be the same as the point of rotation of the generated screw profile.

4. Process according to any of the preceding claims, **characterized in that** at at least one tip arc of a profile of the screw elements there is a following circular arc with radius 0.

5. Process according to any of the preceding claims, **characterized in that**, at at least one tip arc of a profile of the screw elements, there is a following circular arc with radius > 0 and less than 0.1 times the screw diameter.

6. Process according to any of the preceding claims, **characterized in that** tip arcs and groove arcs of the screw elements alternate on the periphery of a profile.

7. Process according to any of the preceding claims, **characterized in that** the screw elements have a number of symmetry axes which corresponds to those of the number of flights.

8. Process according to any of the preceding claims, **characterized in that** the screw elements have point symmetry but do not have mirror symmetry.

9. Process according to any of the preceding claims, **characterized in that** the screw elements are constructed as conveying elements.

10. Process according to any of the preceding claims, **characterized in that** the screw elements are used in a degassing or conveying zone.

11. Process according to any of the preceding claims, **characterized in that** the plastic compositions are thermoplastics or elastomers.

12. Process according to Claim 11, **characterized in that** the thermoplastics used are polycarbonate, polyamide, polyester, in particular polybutylene terephthalate and polyethylene terephthalate, polyether, thermoplastic polyurethane, polyacetal, fluoropolymer, in particular polyvinylidene fluoride, polyether sulfones, polyolefin, in particular polyethylene and polypropylene, polyimide, polyacrylate, in particular poly(methyl)methacrylate, polyphenylene oxide, polyphenylene sulfide, polyether ketone, polyarylether ketone, styrene polymers, in particular polystyrene, styrene copolymers, in particular styreneacrylonitrile copolymer, acrylonitrile-butadienestyrene block copolymers, polyvinyl chloride or a blend of at least two of the stated thermoplastics.

13. Process according to Claim 12, **characterized in that** polycarbonate or a blend of polycarbonate with other polymers is used as the thermoplastic.

14. Process according to Claim 13, **characterized in that** the polycarbonate was produced by the phase boundary process or the melt transesterification process.

15. Process according to Claim 13, **characterized in that** the elastomer used is styrene-butadiene rubber, natural rubber, butadiene rubber, isoprene rubber, ethylene-propylene-diene rubber, ethylene-propylene rubber, butadiene-acrylonitrile rubber, hydrogenated nitrile rubber, butyl rubber, halobutyl rubber, chloroprene rubber, ethylene-vinyl acetate rubber, polyurethane rubber, thermoplastic polyurethane, gutta percha, acrylate rubber, fluororubber, silicone rubber, sulfide rubber, chlorosulfonyl-polyethylene rubber or a combination of at least two of the stated elastomers.

16. Process according to any of the preceding claims, **characterized in that** fillers or reinforcing materials or polymer additives or organic or inorganic pigments, or mixtures thereof, are added to the polymer.


**Revendications**

1. Procédé pour l'extrusion de masses plastiques en utilisant des éléments à vis sans fin pour des machines à vis sans fin à arbres multiples présentant des arbres à vis tournant par paire dans le même sens et raclant exactement l'un sur l'autre par paire, présentant deux nervures spiralées Z ou plus, présentant une distance A entre les axes et un diamètre externe DE, **caractérisé en ce que** la somme des angles d'engrenage d'une paire d'éléments est supérieure à 0 et inférieure à $2\pi$-4 Z arccos(A/DE) et il existe, entre les éléments de vis et le châssis et/ou entre des éléments de vis adjacents, des jeux dans la plage de 0,1 à 0,001 par rapport au diamètre du profil de vis.

2. Procédé selon la revendication 1, **caractérisé en ce que** les profils des éléments à vis du profil de vis qui produit et du profil de vis qui est produit sont à chaque fois constitués de 6*Z arcs de cercle ou plus, d'un rayon supérieur ou égal à zéro et inférieur ou égal à A, les arcs de cercle passant tangentiellement l'un dans l'autre en leurs points d'extrémité.

3. Procédé selon la revendication 2, **caractérisé en ce qu'**à chaque fois une paire des éléments à vis desdits arcs de cercle correspondants du profil de vis qui produit et de celui qui est produit est **caractérisée en ce que**

    - les angles des arcs de cercle correspondants sont identiques,
    - la somme des rayons d'arcs de cercle correspondants est égale à la distance entre les axes,
    - à chaque fois une des lignes de liaison entre le centre de l'arc de cercle du profil de vis qui produit et ses points d'extrémité s'étend parallèlement à chaque fois à une des lignes de liaison entre le centre de l'arc de cercle correspondant du profil de vis qui est produit et ses points d'extrémité,
    - les directions dans lesquelles les points d'extrémité de l'arc de cercle du profil de vis qui produit se situent, partant du centre de l'arc de cercle, sont à chaque fois opposées aux directions dans lesquelles les points d'extrémité de l'arc de cercle correspondant du profil de vis qui est produit se situent, partant du centre de l'arc de cercle du produit de vis qui est produit,
    - le centre de l'arc de cercle du profil de vis qui produit se trouve à une distance du centre de l'arc de cercle correspondant du profil de vis qui est produit qui correspond à la distance entre les axes,
    - la ligne de liaison entre le centre de l'arc de cercle du profil de vis qui produit et le centre de l'arc de cercle correspondant du profil de vis qui est produit est parallèle à la ligne de liaison entre le point de rotation du profil de vis qui produit et le point de rotation du profil de vis qui est produit,
    - la direction dans laquelle le centre de l'arc de cercle du profil de vis qui produit a dû être déplacé pour recouvrir le centre de l'arc de cercle correspondant du profil de vis qui est produit est la même que celle dans laquelle le point de rotation du profil de vis qui produit a dû être déplacé pour recouvrir le point de rotation du profil de vis qui est produit.

4. Procédé selon l'une quelconque des revendications précédentes, **caractérisé en ce qu'**un arc de cercle de rayon 0 se raccorde à au moins un arc d'engrenage d'un profil des éléments de vis.

5. Procédé selon l'une quelconque des revendications précédentes, **caractérisé en ce qu'**un arc de cercle de rayon > 0 et inférieur à 0,1 fois le diamètre de vis se raccorde à au moins un arc d'engrenage d'un profil des éléments de vis.

6. Procédé selon l'une quelconque des revendications précédentes, **caractérisé en ce que** les arcs d'engrenage et les arcs de rainure des éléments de vis alternent lors de la rotation autour d'un profil.

7. Procédé selon l'une quelconque des revendications précédentes, **caractérisé en ce que** les éléments de vis présentent un certain nombre d'axes de symétrie qui correspond au nombre de filets.

8. Procédé selon l'une quelconque des revendications précédentes, **caractérisé en ce que** les éléments de vis présentent une symétrie ponctuelle, mais non pas une symétrie par rapport à un miroir.

9. Procédé selon l'une quelconque des revendications précédentes, **caractérisé en ce que** les éléments de vis sont réalisés sous forme d'éléments de transport.

10. Procédé selon l'une quelconque des revendications précédentes, **caractérisé en ce que** les éléments de vis sont utilisés dans une zone de dégazage ou de transport.

11. Procédé selon l'une quelconque des revendications précédentes, **caractérisé en ce que** les masses plastiques sont des thermoplastiques ou des élastomères.

12. Procédé selon la revendication 11, **caractérisé en ce qu'**on utilise comme thermoplastiques un polycarbonate, un polyamide, un polyester, en particulier le poly(téréphtalate de butylène) et le poly(téréphtalate d'éthylène), un polyéther, un polyuréthane thermoplastique, un polyacétal, un polymère fluoré, en particulier le poly(fluorure de vinylidène), un polyéthersulfone, une polyoléfine, en particulier le polyéthylène et le polypropylène, un polyimide, un polyacrylate, en particulier le polyméthacrylate (de méthyle), un poly(oxyde de phénylène), un poly(sulfure de phénylène), une polyéthercétone, une polyaryléthercétone, des polymères de styrène, en particulier le polystyrène, des copolymères de styrène, en particulier un copolymère de styrène-acrylonitrile, des copolymères à blocs d'acrylonitrile-butadiène-styrène, le poly(chlorure de vinyle) ou un mélange d'au moins deux des thermoplastiques mentionnés.

13. Procédé selon la revendication 12, **caractérisé en ce qu'**on utilise comme thermoplastique un polycarbonate ou un mélange de polycarbonate avec d'autres polymères.

14. Procédé selon la revendication 13, **caractérisé en ce que** le polycarbonate a été préparé selon le procédé par interface ou le procédé par transestérification en masse fondue.

15. Procédé selon la revendication 13, **caractérisé en ce qu'**on utilise comme élastomère un caoutchouc de styrène-butadiène, un caoutchouc naturel, un caoutchouc de butadiène, un caoutchouc d'isoprène, un caoutchouc d'éthylène-propylène-diène, un caoutchouc d'éthylène-propylène, un caoutchouc de butadiène-acrylonitrile, un caoutchouc de nitrile hydrogéné, un caoutchouc de butyle, un caoutchouc d'halogénobutyle, un caoutchouc de chloroprène, un caoutchouc d'éthylène-acétate de vinyle, un caoutchouc de polyuréthane, un polyuréthane thermoplastique, le gutta-percha, un caoutchouc d'arylate, un caoutchouc fluoré, un caoutchouc de silicone, un caoutchouc de sulfure, un caoutchouc de chlorosulfonyl-polyéthylène ou une combinaison d'au moins deux des élastomères mentionnés.

16. Procédé selon l'une quelconque des revendications précédentes, **caractérisé en ce que** le polymère est additionné de charges ou de substances de renforcement ou d'additifs pour polymères ou de pigments organiques ou inorganiques ou de mélanges de ceux-ci.

Fig. 1

Fig. 2

DL, M1, M6

M4

DR, M1', M6' M4'

M2'

M3

M5

2, M2

5', M5'

M3'

Fig. 3a

X

N1

DR

K2

K1

N2

Y

Fig. 3b

Fig. 4

Fig. 5

Fig. 6

Fig. 7

Fig. 8

Fig. 9a

Fig. 9b

Fig. 9c

Fig. 9d

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 862668
- EP O160124 A

- EP 1740638 A

**In der Beschreibung aufgeführte Nicht-Patentliteratur**

- Der gleichläufige Doppelschneckenextruder. Hanser Verlag, 2007
- *chemischer Zusammensetzung, Molekulargewicht oder Molekülstruktur unterscheiden,* 59-93
- Doppelschneckenextruder. Hanser Verlag, 2007, 96 ff
- Schädigungsmechanismen bei Polymeren. **HEPPERLE,J.** Polymeraufbereitung. VDI-Verlag GmbH, 2002
- **ZWEIFEL, H.** Stabilization of Polymeric Materials. Berlin. Springer, 1997

- Antioxidants. **SCHWARZENBACH, K. et al.** Plastics Additives Handboo. Hanser, 2001
- **CHENG, H.N. ; SCHILLING, F.C. ; BOVEY, F.A.** C Nuclear Magnetic Resonance Observation of the Oxidation of Polyethylene. *Macromolecules,* 1976, vol. 9, 363-365
- Comparative Analysis of Various Polyethylene Production Technologies. *Chem. And Petroleum Eng.,* 2008, vol. 44 (7-8